# EUROPEAN PATENT APPLICATION

(11) **EP 4 451 625 A1**
(43) Date of publication of application: **23.10.2024**
(21) Application number: 22915017.2
(22) Date of filing: 29.12.2022
(51) Int. Cl.: H04L 12/46, H04L 69/22, H04L 101/659

(54) **MESSAGE TRANSMISSION METHOD, NETWORK DEVICE, AND SYSTEM**

(30) Priority: 31.12.2021 CN 202111672776; 08.03.2022 CN 202210229154
(71) Applicant: Huawei Technologies Co., Ltd., Shenzhen, Guangdong 518129 (CN)
(72) Inventor: LI, Zhenbin, Shenzhen, Guangdong 518129 (CN); LIU, Shaowei, Shenzhen, Guangdong 518129 (CN); CHEN, Shuanglong, Shenzhen, Guangdong 518129 (CN); LI, Jun, Shenzhen, Guangdong 518129 (CN); WANG, Haibo, Shenzhen, Guangdong 518129 (CN)
(74) Representative: Huawei European IPR
(86) International application number: PCT/CN2022/143237
(87) International publication number: WO 2023/125767

(57) **Abstract**

This application discloses a packet transmission method, a network device, and a system. After receiving a first packet, a first network device obtains a tunnel header corresponding to the first packet. The first network device encapsulates a tunnel header in an IPv6 header by encapsulating the IPv6 header in the first packet, to obtain a second packet. The first network device sends the second packet to a second network device, so that the second network device forwards the packet based on the tunnel header included in the IPv6 header. In this application, the IPv6 header is used to carry the tunnel header. No additional UDP header needs to be encapsulated to carry the tunnel header. This reduces an amount of data for packet encapsulation, and improves packet transmission efficiency.

## Description

This application claims priority to Chinese Patent Application No. CN202111672776.4, filed with the China National Intellectual Property Administration on December 31, 2021 and entitled "METHOD FOR IMPLEMENTING VXLAN AND GTP BASED ON IPv6", which is incorporated herein by reference in its entirety. This application claims priority to Chinese Patent Application No. 202210229154.2, filed on March 8, 2022 and entitled "PACKET TRANSMISSION METHOD, NETWORK DEVICE, AND SYSTEM", which is incorporated herein by reference in its entirety.

### TECHNICAL FIELD

This application relates to the field of communication technologies, and in particular, to a packet transmission method, a network device, and a system.

### BACKGROUND

A virtual extensible local area network (virtual extensible local area network, VXLAN) is an overlay (overlay) network technology. A layer 2 Ethernet tunnel can be established on a layer 3 network, to implement cross-region layer 2 interconnection. In the VXLAN technology, an encapsulation format in which an original Ethernet packet is encapsulated in a user datagram protocol (user datagram protocol, UDP) data packet is used, and an original layer 2 data frame and a VXLAN header are together encapsulated in the UDP data packet. Because the UDP is used as a transmission method at an outer layer, the original Ethernet packet may be transmitted on the layer 2 or layer 3 network. The VXLAN header includes a VXLAN network identifier (VXLAN network identifier, VNI), and the VNI occupies 24 bits in the data packet. Therefore, 16 million VXLANs can coexist, and tenants may be deployed in large scale.

With development and deployment of an internet protocol version 6 (internet protocol version 6, IPv6) technology, traffic of different tenants may need to traverse an IPv6 network. Therefore, it is urgent to deploy the VXLAN technology on the IPv6 network. However, because the UDP encapsulation is used in the VXLAN, encapsulation efficiency in the IPv6 network is low, and packet transmission efficiency is affected.

### SUMMARY

This application provides a packet transmission method, a network device, and a system, to reduce an amount of data for packet encapsulation when the packet passes through an IPv6 network, improve packet encapsulation efficiency, and further improve packet transmission efficiency.

According to a first aspect of this application, a packet transmission method is provided. The method includes: A first network device obtains a first packet, and obtains a tunnel header based on the first packet. The first network device encapsulates an IPv6 header in the first packet to obtain a second packet. The IPv6 header carries the tunnel header. The IPv6 header is used to carry the tunnel header. No additional UDP header needs to be encapsulated to carry the tunnel header. This reduces an amount of data for packet encapsulation, and improves packet encapsulation efficiency. In addition, by including the tunnel header in the IPv6 header, a new method for the packet to traverse an IPv6 network is provided. In this method, there is no need to use the UDP header to carry the tunnel header. Because the IPv6 header is a basic packet encapsulation manner when the packet is forwarded on the IPv6 network, this method improves flexibility of packet encapsulation.

In a possible implementation, the tunnel header includes one or more of a VXLAN header, a general packet radio service tunneling protocol (general packet radio service tunneling protocol, GTP) header, a generic routing encapsulation (generic routing encapsulation, GRE) header, an IP-in-IP header, an intra-site automatic tunnel addressing protocol (intra-site automatic tunnel addressing protocol, ISATAP) header, an internet protocol version 4 over internet protocol version 6 (internet protocol version 4 over IPv6, IPv4 over IPv6) header, a network virtualization using generic routing encapsulation (network virtualization using generic routing encapsulation, NVGRE), a layer 2 tunneling protocol version 3 (layer two tunneling protocol version 3, L2TPv3), and a multi-protocol label switching in generic routing encapsulation (multi-Protocol label switching in GRE, MPLS in GRE) header.

In a possible implementation, the IP header is an IPv6 extension header, and the IPv6 extension header includes a destination option header (destination option header, DOH). Optionally, that the first network device encapsulates an IPv6 header in the first packet to obtain a second packet includes: The first network device encapsulates the IPv6 extension header and an IPv6 basic header in the first packet. DOH in the IPv6 extension header carries the tunnel header, and the IPv6 basic header is used for packet forwarding.

In a possible implementation, the DOH includes a type-length-value (type-length-value, TLV), and a type field of the TLV indicates that the DOH carries the tunnel header.

In a possible implementation, when the tunnel header is the VXLAN header or the GTP header, the IPv6 extension header further includes a segment routing header (segment routing header, SRH). A length (for example, 64 bits) of the VXLAN header or the GTP header is shorter than a length (for example, 128 bits) of another tunnel header. Therefore, the segment routing header SRH may be used to carry the VXLAN header or the GTP header.

In a possible implementation, the tunnel header is carried in a segment identifier (segment identifier, SID) list (SID list) of the SRH. Optionally, the tunnel header is carried in a SID corresponding to the second network device in the segment list SID list of the SRH. In an application scenario of IPv6 forwarding plane-based segment routing (IPv6 segment routing, SRv6), when a part or all of a path needs to be explicitly specified, the SRH may be pushed into the packet, to indicate an explicit path by using the SID list in the SRH. A length of each SID in the SID list is defined to be 128 bits (bits). Information about a SID used for packet forwarding in a packet forwarding process is usually only a part of the 128 bits, or a SID advertised by the network device may be a compressed SID, which occupies only a part of the 128 bits, for example, occupies only 64 bits. In this way, the VXLAN header or the GTP header is included in a bit that is not occupied and that is in the SID of the second network device in the SID list, and the segment identifier list in the segment routing header of the IPv6 extension header is multiplexed. No additional encapsulation needs to be performed to carry the VXLAN header or the GTP header. This improves packet encapsulation efficiency.

In a possible implementation, the SID of the second network device indicates the second network device to forward a packet based on the tunnel header carried in the SID. The SID of the second network device includes a locator (locator) field and a function (function) field. Optionally, the SID of the second network device may further include a parameter (argument) field.

In a possible implementation, the VXLAN header or the GTP header may be carried in the function field of the SID of the second network device.

In a possible implementation, when the tunnel header is the VXLAN header or the GTP header, the IPv6 header is an IPv6 basic header. The IPv6 basic header includes basic packet forwarding information, for example, includes a source address field and a destination address field. The source address field is used to carry a source address of the packet, and the destination address field is used to carry a destination address of the packet.

In a possible implementation, the tunnel header is carried in the destination address field of the IPv6 basic header. Because the destination address field of the IPv6 basic header is 128 bits (bits), prefix information or SRv6 locator used for packet forwarding in a packet forwarding process usually occupies a part of the 128 bits, for example, occupies only first 64 bits. In this way, the VXLAN header or the GTP header is included in a bit that is not occupied by the prefix information or the SRv6 locator and that is in the destination address field, and the destination address field of the IPv6 basic header is multiplexed. No additional encapsulation needs to be performed to carry the VXLAN header or the GTP header. This improves packet encapsulation efficiency.

In a possible implementation, the 65^{th} bit to the 128^{th} bit in the destination address field carry the tunnel header.

In a possible implementation, a destination address in the destination address field indicates the second network device to forward the packet based on the tunnel header carried in the destination address field.

In a possible implementation, a flow label (flow label) field in the IPv6 header carries a port number.

In a possible implementation, the port number is used to perform load balance processing in a forwarding process of the second packet, or indicates a type of the second packet. For example, when the tunnel header is the VXLAN header, the port number indicates that the second packet is a VXLAN packet.

In a possible implementation, the port number carried in the flow label may be obtained through calculation based on a payload (payload) in the first packet, to ensure that a load balance effect implemented in the forwarding process of the second packet is consistent with a load balance effect implemented by using a UDP source port number. A calculation method used for calculating the port number based on the payload in the first packet may reuse a calculation method of the UDP source port number.

In a possible implementation, that a first network device obtains a tunnel header based on the first packet includes: The first network device obtains the tunnel header based on an interface for receiving the first packet. The tunnel header corresponds to the interface for receiving the first packet.

In a possible implementation, a next header (Next Header) of the IPv6 header indicates that a next header adjacent to the IPv6 header in the second packet is an Ethernet header. The IPv6 header is used to carry the tunnel header, and there is no need to use a UDP header to carry the tunnel header in the packet. Therefore, the next header of the IPv6 header is set to an Ethernet (Ethernet, ETH) type. Therefore, packet processing efficiency in the forwarding process of the second packet can be improved.

According to a second aspect of this application, a packet transmission method is provided. The method includes: A second network device receives a second packet from a first network device. The second packet is encapsulated with an internet protocol version 6 IPv6 header, and the IPv6 header carries a tunnel header. The second network device obtains the tunnel header from the IPv6 header. The second network device decapsulates the second packet to obtain a first packet. The first packet does not include the IPv6 header. The second network device forwards the first packet based on the tunnel header.

In a possible implementation, the tunnel header includes one or more of a VXLAN header, a GTP header, a GRE header, an IP-in-IP header, an ISATAP header, an IPv4 over IPv6 header, an NVGRE header, an L2TPv3 header, and an MPLS in GRE header.

In a possible implementation, the IP header is an IPv6 extension header, and the IPv6 extension header includes a destination option header DOH.

In a possible implementation, an options Options part included in the DOH carries the tunnel header.

In a possible implementation, when the tunnel header is the VXLAN header or the GTP header, the IPv6 extension header further includes a segment routing header SRH.

In a possible implementation, the tunnel header is carried in a SID list of the SRH.

In a possible implementation, the tunnel header is carried in a SID corresponding to the second network device in the SID list of the SRH.

In a possible implementation, that the second network device obtains the tunnel header from the IPv6 header includes: The second network device determines that a destination address field of the second packet includes the SID of the second network device. In response to determining that the destination address field of the second packet includes the SID of the second network device, the second network device obtains the tunnel header from the SID of the second network device.

In a possible implementation, a type of the SID of the second network device is a virtual network endpoint (Endpoint with decapsulation and VXLAN table lookup use, END.VN) type. The SID is an SRv6 SID. A locator part of the SID includes an address of a tunnel endpoint, and a function part of the SID includes the tunnel header. Forwarding actions corresponding to a behavior (behavior) of the SID include: After receiving the packet, a destination tunnel endpoint obtains a corresponding instance forwarding table based on the tunnel header in the SID in the packet, decapsulates the packet, searches a forwarding table based on a MAC address and the like in the payload (Payload), and forwards the packet. The decapsulating the packet includes: removing the IPv6 basic header encapsulated in the second packet to obtain the first packet, or removing the IPv6 basic header and the IPv6 extension header encapsulated in the second packet to obtain the first packet.

Optionally, a SID corresponding to an address of the second network device is a SID of END.VN type.

Optionally, the SID corresponding to the address of the second network device is an SRv6 locator of the second network device. In a possible implementation, before the second network device receives the second packet from the first network device, the method further includes: The second network device advertises the SID of the second network device to the first network device.

In a possible implementation, the method further includes: The second network device establishes a forwarding entry. The forwarding entry includes the SID of the second network device. The second network device decapsulates the second packet based on the forwarding entry to obtain the first packet, and forwards the first packet based on the VNI.

In a possible implementation, when the tunnel header is the VXLAN header or the GTP header, the IPv6 header is an IPv6 basic header.

In a possible implementation, the tunnel header is carried in a destination address field of the IPv6 basic header.

In a possible implementation, that the second network device obtains the tunnel header from the IPv6 header includes: The second network device determines that the destination address field includes the address of the second network device. In response to determining that the destination address field includes the address of the second network device, the second network device obtains the tunnel header from the destination address field.

According to a third aspect of this application, a VXLAN packet transmission method is provided. The method includes: A first network device receives a first packet, and obtains a VNI based on the first packet. The first network device encapsulates an IPv6 header in the first packet to obtain a second packet. The IPv6 header carries the VNI. The first network device sends the second packet to a second network device. It may be learned that, after obtaining the VNI corresponding to the first packet, the first network device encapsulates the IPv6 header in the first packet, and includes the VNI in the IPv6 header. No additional UDP header needs to be encapsulated to carry the VNI. This reduces an amount of data for packet encapsulation, and improves packet encapsulation efficiency. In addition, by including the VNI in the IPv6 header, a new method for a VXLAN packet to traverse an IPv6 network is provided. In this method, there is no need to use the UDP header to carry the VNI. Because the IPv6 header is a basic packet encapsulation manner when the packet is forwarded on the IPv6 network, this method improves flexibility of VXLAN packet encapsulation.

In a possible implementation, a manner in which the IPv6 header carries the VNI may be adding the VNI to the IPv6 header, or may be encapsulating a VXLAN header in the IPv6 header.

In a possible implementation, the IPv6 header is an IPv6 basic header.

In a possible implementation, the VNI is carried in a destination address field of the IPv6 basic header. Because the destination address field of the IPv6 basic header is 128 bits (bits), prefix information or SRv6 locator used for packet forwarding in a packet forwarding process usually occupies a part of the 128 bits, for example, occupies only first 64 bits. In this way, the VNI is included in a bit that is not occupied by the prefix information or the SRv6 locator and that is in the destination address field, and the destination address field of the IPv6 basic header is multiplexed. No additional header needs to be encapsulated to carry the VNI. This improves packet encapsulation efficiency.

In a possible implementation, the 65^{th} bit to the 128^{th} bit in the destination address field carry the VNI.

In a possible implementation, the destination address field includes a VXLAN header, and the VXLAN header carries the VNI. Because the VXLAN header occupies 64 bits, the VXLAN header may be completely carried in the destination address field. In addition to the VNI, the VXLAN header further includes some pieces of indication information used for VXLAN packet forwarding. The complete VXLAN header is carried in the destination address field, so that reliability of the packet forwarding is improved.

In a possible implementation, the 65^{th} bit to the 128^{th} bit in the destination address field carry the VXLAN header.

In a possible implementation, a destination address in the destination address field indicates the second network device to forward the packet based on the VNI information carried in the destination address field.

In a possible implementation, the IPv6 header is an IPv6 extension header, and the IPv6 extension header includes a DOH or an SRH. Optionally, that the first network device encapsulates an IPv6 header in the first packet to obtain a second packet includes: The first network device encapsulates the IPv6 extension header and the IPv6 basic header in the first packet. The IPv6 extension header carries the VNI, and the IPv6 basic header is used for packet forwarding.

In a possible implementation, the DOH includes a type-length-value TLV, and a type field of the TLV indicates that the DOH carries the VNI.

In a possible implementation, the DOH is used to carry the VNI, or the DOH is used to carry the VXLAN header, and the VXLAN header carries the VNI.

In a possible implementation, the VNI is carried in a SID list of the SRH. Optionally, the VNI is carried in a SID corresponding to the second network device in the SID list. In an application scenario of IPv6 forwarding plane-based segment routing SRv6, when a part or all of a path needs to be explicitly specified, the SRH may be pushed into the packet, to indicate an explicit path by using the SID list in the SRH. A length of each SID in the SID list is defined to be 128 bits (bits). Information about a SID used for packet forwarding in a packet forwarding process is usually only a part of the 128 bits, or a SID advertised by the network device may be a compressed SID, which occupies only a part of the 128 bits, for example, occupies only 64 bits. In this way, the VNI is included in a bit that is not occupied and that is in the SID of the second network device in the SID list, and the segment identifier list in the segment routing header of the IPv6 extension header is multiplexed. No additional header needs to be encapsulated to carry the VNI. This improves packet encapsulation efficiency.

In a possible implementation, the SID of the second network device includes the VXLAN header, and the VXLAN header carries the VNI.

In a possible implementation, the SID of the second network device indicates the second network device to forward the packet based on the VNI carried in the SID. After receiving the second packet, the second network device determines, based on the SID carried in the second packet, that the second network device is an end node on the explicit path, and forwards the packet based on the VNI in the second packet. The SID of the second network device includes a locator (locator) field and a function (function) field. Optionally, the SID of the second network device may further include a parameter (argument) field.

In a possible implementation, the VNI is carried in the function field of the SID of the second network device.

In a possible implementation, the function field in the SID of the second network device includes the VXLAN header, and the VXLAN header carries the VNI.

In a possible implementation, a flow label in the IPv6 header carries a port number corresponding to the VXLAN packet.

In a possible implementation, the port number is used to perform load balance processing in a forwarding process of the second packet, or the port number is used to determine that the second packet includes the VXLAN packet.

In a possible implementation, a source port number of the VXLAN packet is obtained through calculation based on a payload (payload) of the VXLAN packet, for example, obtained by performing hash on the payload of the VXLAN packet by using a hash (hash) algorithm. A value of the port number obtained from the VXLAN packet may be carried in the flow label of the second packet. A method for calculating a value of the flow label of the second packet is the same as a method for calculating a UDP source port number used for load balance in the VXLAN packet. That is, the port number carried in the flow label is also obtained through calculation based on a payload in the first packet, to ensure that a load balance effect implemented in the forwarding process of the second packet is consistent with a load balance effect implemented by using a UDP source port number of a conventional VXLAN packet.

In a possible implementation, the IPv6 header further includes VXLAN flags (flags), and the VXLAN flags include a flag indicating that the second packet carries a valid VNI.

In a possible implementation, the IPv6 header carries the VXLAN header, and the VXLAN header carries the VNI.

In a possible implementation, a next header (Next Header) of the IPv6 header indicates that a next header adjacent to the IPv6 header in the second packet is an Ethernet header. The IPv6 header is used to carry the VNI, and there is no need to use a UDP header to carry the VNI in the packet. Therefore, the next header of the IPv6 header is set to an Ethernet (Ethernet, ETH) type. Therefore, packet processing efficiency in the forwarding process of the second packet can be improved.

In a possible implementation, that a first network device obtains a VNI based on the first packet includes: The first network device obtains the VNI based on an interface for receiving the first packet. The VNI corresponds to the interface for receiving the first packet.

According to a fourth aspect of this application, a VXLAN packet transmission method is provided. The method includes: A second network device receives a second packet from a first network device. The second packet is encapsulated with an IPv6 header, and the IPv6 header carries a VNI. The second network device obtains the VNI from the IPv6 header. The second network device decapsulates the second packet to obtain a first packet. The first packet does not include the IPv6 header. The second network device forwards the first packet based on the VNI.

In a possible implementation, a manner in which the IPv6 header carries the VNI may be adding the VNI to the IPv6 header, or may be encapsulating a VXLAN header in the IPv6 header, where the VXLAN header includes the VNI.

In a possible implementation, the IPv6 header is an IPv6 basic header.

In a possible implementation, the VNI is carried in a destination address field of the IPv6 basic header.

In a possible implementation, the destination address field includes the VXLAN header, and the VXLAN header carries the VNI.

In a possible implementation, the 65^{th} bit to the 128^{th} bit in the destination address field carry the VNI.

In a possible implementation, the 65^{th} bit to the 128^{th} bit in the destination address field carry the VXLAN header.

In a possible implementation, that the second network device obtains the VNI from the IPv6 header includes: The second network device determines that the destination address field includes an address of the second network device. In response to determining that the destination address field includes the address of the second network device, the second network device obtains the VNI from the destination address field.

In a possible implementation, before the second network device receives the second packet from the first network device, the method further includes: The second network device advertises the address of the second network device to the first network device, to indicate the first network device to include a VNI of a VXLAN packet sent to the second network device in the address of the second network device.

In a possible implementation, the IPv6 header is an IPv6 extension header, and the IPv6 extension header includes a DOH or an SRH.

In a possible implementation, the DOH includes a TLV, and a type field of the TLV indicates that the DOH carries the VNI.

In a possible implementation, the DOH includes the VXLAN header, and the VXLAN header carries the VNI.

In a possible implementation, the VNI is carried in a SID list of the SRH.

In a possible implementation, the VNI is carried in a SID corresponding to the second network device in the SID list of the SRH.

In a possible implementation, the SID of the second network device includes the VXLAN header, and the VXLAN header carries the VNI.

In a possible implementation, that the second network device obtains the VNI from the IPv6 header includes: The second network device determines that a destination address field of the second packet includes the SID of the second network device. In response to determining that the destination address field of the second packet includes the SID of the second network device, the second network device obtains the VNI from the SID of the second network device.

In a possible implementation, a type of the SID of the second network device is an END.VN type. The SID is an SRv6 SID. Alocator part of the SID includes an address of a VXLAN tunnel endpoint (VXLAN tunnel endpoints, VTEP) of the VXLAN packet, and a function part of the SID includes the VXLAN header. Forwarding actions corresponding to a behavior (behavior) of the SID include: After receiving the packet, a destination VTEP node obtains a corresponding VXLAN instance forwarding table based on the VNI in the SID of the packet, decapsulates the packet, searches the forwarding table based on a MAC address and the like in the payload (Payload), and forwards the packet. The decapsulating the packet includes: removing the IPv6 basic header encapsulated in the second packet to obtain the first packet, or removing the IPv6 basic header and the IPv6 extension header encapsulated in the second packet to obtain the first packet.

Optionally, a SID corresponding to the address of the second network device is a SID of END.VN type.

Optionally, the SID corresponding to the address of the second network device is an SRv6 locator of the second network device.

In a possible implementation, before the second network device receives the second packet from the first network device, the method further includes: The second network device advertises the SID of the second network device to the first network device, to indicate the first network device to include a VNI of a VXLAN packet sent to the second network device in the SID of the second network device.

In a possible implementation, the method further includes: The second network device establishes a forwarding entry. The forwarding entry includes the SID of the second network device. The second network device decapsulates the second packet based on the forwarding entry to obtain the first packet, and forwards the first packet based on the VNI.

In a possible implementation, a flow label in the IPv6 header carries a port number corresponding to the VXLAN packet. Optionally, the port number is used to perform load balance processing in a forwarding process of the second packet.

In a possible implementation, the IPv6 header further includes VXLAN flags (flags), and the VXLAN flags include a flag indicating that the second packet carries a valid VNI.

According to a fifth aspect of this application, a GTP packet transmission method is provided. The method includes: A first network device receives a first packet, and obtains a tunnel endpoint identifier (tunnel endpoint identifier, TEID) based on the first packet. The first network device encapsulates an IPv6 header in the first packet to obtain a second packet. The IPv6 header carries the TEID. The first network device sends the second packet to a second network device. That is, after obtaining the TEID corresponding to the first packet, the first network device encapsulates the IPv6 header in the first packet, and includes the TEID in the IPv6 header. No additional UDP header needs to be encapsulated to carry the TEID. This reduces an amount of data for packet encapsulation, and improves packet encapsulation efficiency. In addition, by including the TEID in the IPv6 header, a new method for a GTP packet to traverse an IPv6 network is provided. In this method, there is no need to use the UDP header to carry the TEID. Because the IPv6 header is a basic packet encapsulation manner when the packet is forwarded on the IPv6 network, this method improves flexibility of GTP packet encapsulation.

In a possible implementation, a manner in which the IPv6 header carries the TEID may be adding the TEID to the IPv6 header, or may be encapsulating a GTP header in the IPv6 header, where the GTP header includes the TEID.

In a possible implementation, the IPv6 header is an IPv6 basic header.

In a possible implementation, the TEID is carried in a destination address field of the IPv6 basic header. Because the destination address field of the IPv6 basic header is 128 bits (bits), prefix information or SRv6 locator used for packet forwarding in a packet forwarding process usually occupies a part of the 128 bits, for example, occupies only first 64 bits. In this way, the TEID is included in a bit that is not occupied by the prefix information or the SRv6 locator and that is in the destination address field, and the destination address field of the IPv6 basic header is multiplexed. No additional header needs to be encapsulated to carry the TEID. This improves packet encapsulation efficiency.

In a possible implementation, the destination address field includes the GTP header, and the GTP header carries the TEID. Because the GTP header occupies 64 bits, the GTP header may be completely carried in the destination address field. In addition to the TEID, the GTP header further includes some pieces of indication information used for GTP packet forwarding. The complete GTP header is carried in the destination address field, so that reliability of the packet forwarding is improved.

In a possible implementation, a destination address in the destination address field indicates the second network device to forward the packet based on the TEID information carried in the destination address field.

In a possible implementation, the IPv6 header is an IPv6 extension header, and the IPv6 extension header includes a DOH or an SRH. Optionally, that the first network device encapsulates an IPv6 header in the first packet to obtain a second packet includes: The first network device encapsulates the IPv6 extension header and the IPv6 basic header in the first packet. The IPv6 extension header carries the VNI, and the IPv6 basic header is used for packet forwarding.

In a possible implementation, the DOH includes a TLV, and a type field of the TLV indicates that the DOH carries the TEID.

In a possible implementation, the DOH is used to carry the TEID, or the DOH is used to carry the GTP header, and the GTP header carries the TEID.

In a possible implementation, the TEID is carried in a SID list of the SRH. Optionally, the TEID is carried in a SID corresponding to the second network device in the SID list. In an application scenario of IPv6 forwarding plane-based segment routing SRv6, when a part or all of a path needs to be explicitly specified, the SRH may be pushed into the packet, to indicate an explicit path by using the SID list in the SRH. A length of each SID in the SID list is defined to be 128 bits (bits). Information about a SID used for packet forwarding in a packet forwarding process is usually only a part of the 128 bits, or a SID advertised by the network device may be a compressed SID, which occupies only a part of the 128 bits, for example, occupies only 64 bits. In this way, the TEID is included in a bit that is not occupied and that is in the SID of the second network device in the SID list, and the segment identifier list in the segment routing header of the IPv6 extension header is multiplexed. No additional header needs to be encapsulated to carry the TEID. This improves packet encapsulation efficiency.

In a possible implementation, the SID of the second network device includes the GTP header, and the GTP header carries the TEID.

In a possible implementation, the SID of the second network device indicates the second network device to forward the packet based on the TEID carried in the SID. After receiving the second packet, the second network device determines, based on the SID carried in the second packet, that the second network device is an end node on the explicit path, and forwards the packet based on the TEID in the second packet. The SID of the second network device includes a locator (locator) field and a function (function) field. Optionally, the SID of the second network device may further include a parameter (argument) field.

In a possible implementation, the TEID is carried in the function field of the SID of the second network device.

In a possible implementation, the function field in the SID of the second network device includes the GTP header, and the GTP header carries the TEID.

In a possible implementation, a flow label in the IPv6 header carries a port number corresponding to the GTP packet.

In a possible implementation, the port number is used to perform load balance processing in a forwarding process of the second packet, or the port number is used to determine that the second packet includes the GTP packet.

In a possible implementation, the port number carried in the flow label may be obtained through calculation based on a payload (payload) in the first packet, to ensure that a load balance effect implemented in the forwarding process of the second packet is consistent with a load balance effect implemented by using a UDP source port number. A calculation method used for calculating the port number based on the payload in the first packet may reuse a calculation method of the UDP source port number.

In a possible implementation, the IPv6 header further includes a TEID flag (flag), and the TEID flag indicates that the second packet carries the TEID.

In a possible implementation, the IPv6 header carries the GTP header, and the GTP header carries the TEID.

In a possible implementation, a next header (Next Header) of the IPv6 header indicates that a next header adjacent to the IPv6 header in the second packet is an Ethernet header. The IPv6 header is used to carry the TEID, and there is no need to use a UDP header to carry the TEID in the packet. Therefore, the next header of the IPv6 header is set to an Ethernet (Ethernet, ETH) type. Therefore, packet processing efficiency in the forwarding process of the second packet can be improved.

In a possible implementation, that a first network device obtains a TEID based on the first packet includes: The first network device obtains the TEID based on an interface for receiving the first packet. The TEID corresponds to the interface for receiving the first packet.

According to a sixth aspect of this application, a GTP packet transmission method is provided. The method includes: A second network device receives a second packet from a first network device. The second packet is encapsulated with an IPv6 header, and the IPv6 header carries a TEID. The second network device obtains the TEID from the IPv6 header. The second network device decapsulates the second packet to obtain a first packet. The first packet does not include the IPv6 header. The second network device forwards the first packet based on the TEID.

In a possible implementation, a manner in which the IPv6 header carries the TEID may be adding the TEID to the IPv6 header, or may be encapsulating a GTP header in the IPv6 header, where the GTP header includes the TEID.

In a possible implementation, the IPv6 header is an IPv6 basic header.

In a possible implementation, the TEID is carried in a destination address field of the IPv6 basic header.

In a possible implementation, the destination address field includes the GTP header, and the GTP header carries the TEID.

In a possible implementation, that the second network device obtains the TEID from the IPv6 header includes: The second network device determines that the destination address field includes an address of the second network device. In response to determining that the destination address field includes the address of the second network device, the second network device obtains the TEID from the destination address field.

In a possible implementation, before the second network device receives the second packet from the first network device, the method further includes: The second network device advertises the address of the second network device to the first network device, to indicate the first network device to include a TEID of a GTP packet sent to the second network device in the address of the second network device.

In a possible implementation, the IPv6 header is an IPv6 extension header, and the IPv6 extension header includes a DOH or an SRH.

In a possible implementation, the DOH includes a TLV, and a type field of the TLV indicates that the DOH carries the TEID.

In a possible implementation, the DOH includes the GTP header, and the GTP header carries the TEID.

In a possible implementation, the TEID is carried in a SID list of the SRH.

In a possible implementation, the TEID is carried in a SID corresponding to the second network device in the SID list of the SRH.

In a possible implementation, the SID of the second network device includes the GTP header, and the GTP header carries the TEID.

In a possible implementation, that the second network device obtains the TEID from the IPv6 header includes: The second network device determines that a destination address field of the second packet includes the SID of the second network device. In response to determining that the destination address field of the second packet includes the SID of the second network device, the second network device obtains the TEID from the SID of the second network device.

In a possible implementation, a type of the SID of the second network device is an END.VN type. The SID is an SRv6 SID. A locator part of the SID includes an address of a tunnel endpoint of the GTP packet, and a function part of the SID includes the GTP header. Forwarding actions corresponding to a behavior (behavior) of the SID include: After receiving the packet, a destination tunnel endpoint obtains a corresponding instance forwarding table based on the TEID in the SID, decapsulates the packet, searches the forwarding table based on a MAC address and the like in the payload (Payload), and forwards the packet. The decapsulating the packet includes: removing the IPv6 basic header encapsulated in the second packet to obtain the first packet, or removing the IPv6 basic header and the IPv6 extension header encapsulated in the second packet to obtain the first packet.

Optionally, a SID corresponding to the address of the second network device is a SID of END.VN type.

Optionally, the SID corresponding to the address of the second network device is an SRv6 locator of the second network device.

In a possible implementation, before the second network device receives the second packet from the first network device, the method further includes: The second network device advertises the SID of the second network device to the first network device, to indicate the first network device to include a TEID of a GTP packet sent to the second network device in the SID of the second network device.

In a possible implementation, the method further includes: The second network device establishes a forwarding entry. The forwarding entry includes the SID of the second network device. The second network device decapsulates the second packet based on the forwarding entry to obtain the first packet, and forwards the first packet based on the TEID.

In a possible implementation, a flow label in the IPv6 header carries a port number corresponding to the GTP packet. Optionally, the port number is used to perform load balance processing in a forwarding process of the second packet.

In a possible implementation, the IPv6 header further includes a TEID flag, and the TEID flag indicates that the second packet carries the TEID.

According to a seventh aspect of this application, a first network device is provided, and is configured to: perform the method according to any one of the first aspect or the possible implementations of the first aspect, perform the method according to any one of the third aspect or the possible implementations of the third aspect, or perform the method according to any one of the fifth aspect or the possible implementations of the fifth aspect. Specifically, the first network device includes a unit configured to perform the method according to any one of the first aspect or the possible designs of the first aspect, a unit configured to perform the method according to any one of the third aspect or the possible implementations of the third aspect, or a unit configured to perform the method according to any one of the fifth aspect or the possible implementations of the fifth aspect.

According to an eighth aspect of this application, a second network device is provided, and is configured to: perform the method according to any one of the second aspect or the possible implementations of the second aspect, perform the method according to any one of the fourth aspect or the possible implementations of the fourth aspect, or perform the method according to any one of the sixth aspect or the possible implementations of the sixth aspect. Specifically, the second network device includes a unit configured to perform the method according to any one of the second aspect or the possible designs of the second aspect, a unit configured to perform the method according to any one of the fourth aspect or the possible implementations of the fourth aspect, or a unit configured to perform the method according to any one of the sixth aspect or the possible implementations of the sixth aspect.

According to a ninth aspect of this application, a network system for GTP packet transmission is provided. The network system includes a first network device and a second network device. The first network device is configured to perform the method according to any one of the first aspect or the possible designs of the first aspect, perform the method according to any one of the third aspect or the possible implementations of the third aspect, or perform the method according to any one of the fifth aspect or the possible implementations of the fifth aspect. The second network device is configured to perform the method according to any one of the second aspect or the possible designs of the second aspect, perform the method according to any one of the fourth aspect or the possible implementations of the fourth aspect, or perform the method according to any one of the sixth aspect or the possible implementations of the sixth aspect.

According to a tenth aspect of this application, a network device is provided. The device includes a processor and a memory. The memory is configured to store instructions or program code. The processor is configured to execute the instructions or the program code in the memory, to enable the network device to perform the method according to any one of the first aspect or the possible designs of the first aspect, perform the method according to any one of the second aspect or the possible designs of the second aspect, perform the method according to any one of the third aspect or the possible designs of the third aspect, perform the method according to any one of the fourth aspect or the possible designs of the fourth aspect, perform the method according to any one of the fifth aspect or the possible designs of the fifth aspect, or perform the method according to any one of the sixth aspect or the possible designs of the sixth aspect.

According to an eleventh aspect of this application, a computer-readable storage medium is provided. The computer-readable storage medium stores instructions. When the instructions are run on a processor, a computer or a network device is enabled to perform the method according to any one of the first aspect or the possible designs of the first aspect, perform the method according to any one of the second aspect or the possible designs of the second aspect, perform the method according to any one of the third aspect or the possible designs of the third aspect, perform the method according to any one of the fourth aspect or the possible designs of the fourth aspect, perform the method according to any one of the fifth aspect or the possible designs of the fifth aspect, or perform the method according to any one of the sixth aspect or the possible designs of the sixth aspect.

According to a twelfth aspect of this application, a computer program product is provided. The computer program product includes a program. When the program is run on a processor, a computer or a network device is enabled to perform the method according to any one of the first aspect or the possible designs of the first aspect, perform the method according to any one of the second aspect or the possible designs of the second aspect, perform the method according to any one of the third aspect or the possible designs of the third aspect, perform the method according to any one of the fourth aspect or the possible designs of the fourth aspect, perform the method according to any one of the fifth aspect or the possible designs of the fifth aspect, or perform the method according to any one of the sixth aspect or the possible designs of the sixth aspect.

According to a thirteenth aspect of this application, a chip is provided, and includes an interface circuit and a processor. The interface circuit is connected to the processor. The processor is configured to enable the chip to perform the method according to any one of the first aspect or the possible designs of the first aspect, perform the method according to any one of the second aspect or the possible designs of the second aspect, perform the method according to any one of the third aspect or the possible designs of the third aspect, perform the method according to any one of the fourth aspect or the possible designs of the fourth aspect, perform the method according to any one of the fifth aspect or the possible designs of the fifth aspect, or perform the method according to any one of the sixth aspect or the possible designs of the sixth aspect.

### BRIEF DESCRIPTION OF DRAWINGS

To illustrate technical solutions in embodiments of this application or in an existing technology more clearly, the following briefly introduces the accompanying drawings used to describe embodiments or the existing technology. It is clear that the accompanying drawings in the following descriptions show merely some embodiments recorded in this application, and persons of ordinary skill in the art may still derive other drawings from these accompanying drawings without creative efforts.
FIG. 1a is a schematic diagram of a VXLAN network application scenario according to an embodiment of this application;
FIG. 1b is a schematic diagram of a VXLAN packet encapsulation structure according to an embodiment of this application;
FIG. 1c is a schematic diagram of a GTP packet encapsulation structure according to an embodiment of this application;
FIG. 2 is a flowchart of a packet transmission method according to an embodiment of this application;
FIG. 3a is a schematic diagram of a format of a DOH according to an embodiment of this application;
FIG. 3b is a schematic diagram of encapsulating a GRE header in a DOH according to an embodiment of this application;
FIG. 3c is a schematic diagram of a format of a GRE header according to an embodiment of this application;
FIG. 4a is a schematic diagram of a format of a TLV according to an embodiment of this application;
FIG. 4b is a schematic diagram of encapsulating a GRE header by using a TLV according to an embodiment of this application;
FIG. 5a is a schematic diagram of a format of an SRH according to an embodiment of this application;
FIG. 5b is a schematic diagram of a format of a SID according to an embodiment of this application;
FIG. 5c is a schematic diagram of encapsulating a GTP header by using a SID according to an embodiment of this application;
FIG. 6a is a schematic diagram of a format of an IPv6 basic header according to an embodiment of this application;
FIG. 6b is a schematic diagram of encapsulating a GTP header by using a destination address field according to an embodiment of this application;
FIG. 7 is a flowchart of a VXLAN packet transmission method according to an embodiment of this application;
FIG. 8a is a schematic diagram of encapsulating a VNI in a destination address field according to an embodiment of this application;
FIG. 8b is another schematic diagram of encapsulating a VNI in a destination address field according to an embodiment of this application;
FIG. 8c is a schematic diagram of encapsulating a VXLAN header in a destination address field according to an embodiment of this application;
FIG. 9a is a schematic diagram of encapsulating a VNI in a DOH according to an embodiment of this application;
FIG. 9b is a schematic diagram of encapsulating a VXLAN header in a DOH according to an embodiment of this application;
FIG. 9c is another schematic diagram of encapsulating a VNI in a DOH according to an embodiment of this application;
FIG. 10a is a schematic diagram of encapsulating a VNI by using a TLV according to an embodiment of this application;
FIG. 10b is another schematic diagram of encapsulating a VXLAN header by using a TLV according to an embodiment of this application;
FIG. 11a is a schematic diagram of encapsulating a VNI in an SRH according to an embodiment of this application;
FIG. 11b is a schematic diagram of encapsulating a VXLAN header in an SRH according to an embodiment of this application;
FIG. 11c is another schematic diagram of encapsulating a VNI in an SRH according to an embodiment of this application;
FIG. 12 is a schematic diagram of an application scenario according to an embodiment of this application;
FIG. 13 is a schematic diagram of a structure of a network device for GTP packet transmission according to an embodiment of this application;
FIG. 14 is a schematic diagram of a structure of a network device for packet transmission according to an embodiment of this application;
FIG. 15 is a schematic diagram of a structure of another network device for packet transmission according to an embodiment of this application;
FIG. 16 is a schematic diagram of a structure of a network system for packet transmission according to an embodiment of this application;
FIG. 17 is a schematic diagram of a structure of a network device according to an embodiment of this application; and
FIG. 18 is a schematic diagram of a structure of another network device according to an embodiment of this application.

### DESCRIPTION OF EMBODIMENTS

To make persons skilled in the art better understand solutions provided in this application, the following clearly describes the technical solutions in embodiments of this application with reference to the accompanying drawings in embodiments of this application. It is clear that the described embodiments are merely some but not all of embodiments of this application.

Before specific technical solutions are described, key terms and technologies in embodiments of this application are first described.

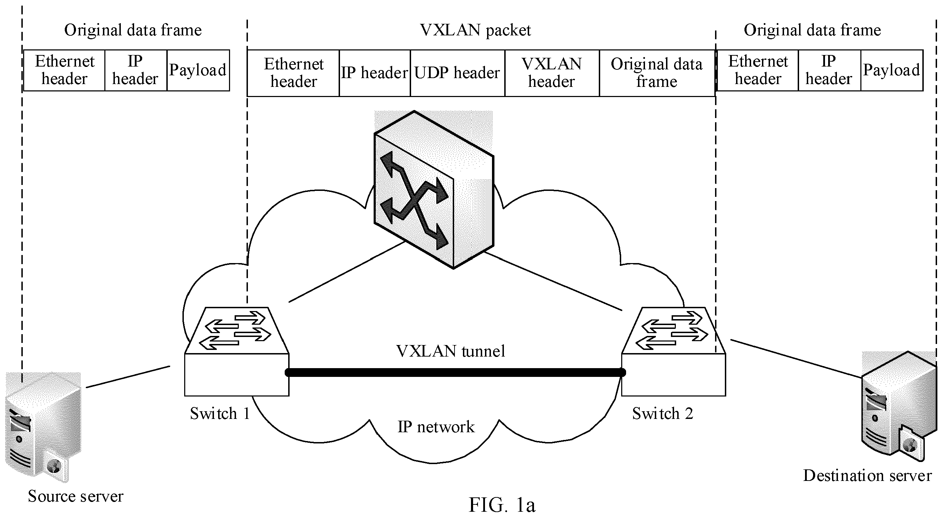

A VXLAN is a virtual tunnel communication technology. Alogical tunnel is established on an internet protocol (Internet Protocol, IP) network between a source network device and a destination network device, and a user-side packet is forwarded through the tunnel after specific encapsulation. For example, as shown in FIG. 1a, a tunnel is established between two switches through the VXLAN. A switch 1 encapsulates an original data frame sent by a source server, so that the original data frame can be transmitted on a bearer network. After reaching a switch 2 connected to a destination server, the original data frame leaves the VXLAN tunnel, and is restored and forwarded to the destination server.

In the VXLAN network, devices that encapsulate and decapsulate the original data frame are VTEPs. The VTEPs are edge devices of the VXLAN network, and are a start point and an end point of the VXLAN tunnel. In FIG. 1a, the switch 1 and the switch 2 are VTEPs. The VTEP may be an independent network device, or may be a virtual switch in a server. The original data frame sent by the source server is encapsulated as a VXLAN packet on the VTEP, and is transmitted to the other VTEP in the IP network. The original data frame is restored through decapsulation, and is finally forwarded to the destination server.

A VNI is similar to a virtual local area network (Virtual Local Area Network, VLAN) identifier (identifier, ID), and is used to distinguish VXLAN segments. Virtual machines at different VXLAN segments cannot directly communicate with each other at layer 2. The VNI may also be understood as a user identifier. A VNI represents a tenant, and tenants belonging to different VNIs cannot directly communicate with each other at layer 2. As shown in FIG. 1a, when a VXLAN packet is encapsulated, 24-bit length space is allocated to the VNI, so that the VNI can support isolation of massive tenants. Specifically, the VTEP encapsulates a VXLAN header, a UDP header, an outer IP header, and an outer media access control (media access control, MAC) header in the original data sent by the source server.

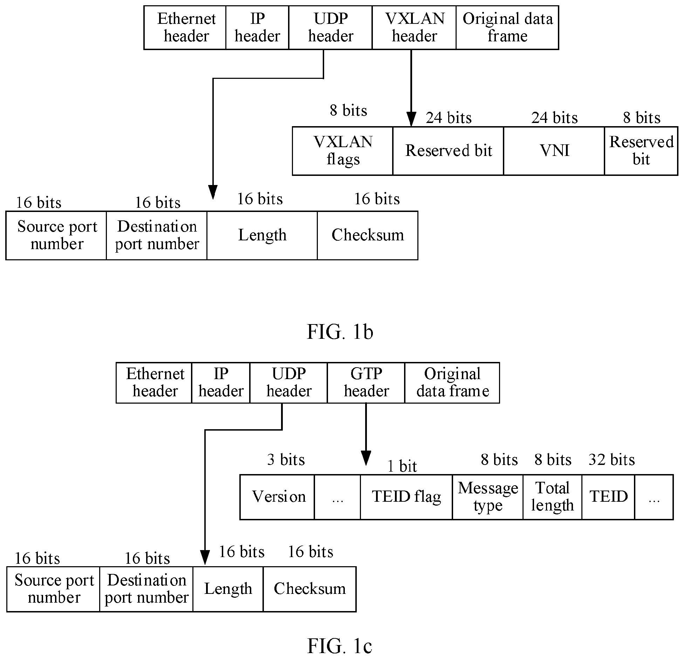

FIG. 1b is a schematic diagram of a structure including the VXLAN header and the UDP header. A length of the VXLAN header is 8 bytes, including a 24-bit VNI field for carrying VNIs of different tenants in the VXLAN network. In addition, a VXLAN flags (flags) field and two reserved fields are further included. The VXLAN flags field occupies 8 bits, and a value may be 00001000. The two reserved fields occupy 24 bits and 8 bits respectively.

The VXLAN header and the original data frame are together used as UDP data. The UDP header occupies 8 bytes. The UDP header includes a source port number, a destination port number, a UDP length, and a UDP checksum. Each field occupies 16 bits. Optionally, the destination port number (Dest Port) is fixed at 4789, and the source port number (Source Port) is determined by performing a hash algorithm on the original data frame.

A source IP address field in the outer IP header carries an IP address of the VTEP connected to the source server, and a destination IP address field is an IP address of the VTEP connected to the destination server. The outer IP header includes an outer internet protocol version 4 (internet protocol version 4, IPv4) header or an outer IPv6 header. The outer IPv6 header may also be referred to as an IPv6 basic header. A source address field and a destination address field in the IPv6 basic header each occupy 128 bits.

The outer MAC header is an encapsulated outer Ethernet header. A source MAC address field carries a MAC address of the VTEP connected to the source server, and a destination MAC address field is a MAC address of a next-hop device on a path to the destination VTEP.

The GTP is mainly used to provide a tunnel for transmission of signaling and user data between a serving GPRS support node (servicing GPRS support node, SGSN) and a gateway GPRS support node (gateway GPRS support node, GGSN) in a core network. In the GTP, a data frame or data packet of another protocol can be encapsulated again and sent through the tunnel. A GTP header including a TEID is encapsulated in the encapsulated packet, to implement packet forwarding. In a GTP network, devices that encapsulate and decapsulate an original data frame are SGSNs or GGSNs. The SGSN and the GGSN are edge devices of the GTP network, and may be used as a start point and an end point of the GTP tunnel. In FIG. 1a, the switch 1 is the SGSN, and the switch 2 is the GGSN. Specifically, the SGSN encapsulates a GTP header, a UDP header, an outer IP header, and an outer media access control (media access control, MAC) header in the original data sent by the source server.

FIG. 1c is a schematic diagram of a structure including the GTP header and the UDP header. A length of the GTP header is 8 bytes, including a 32-bit TEID field for carrying TEIDs of different tunnels in the GTP network. In addition, a TEID flag (flag) field, a version (Version) field, a message type (Message Type) field, a total length (Total Length) field, and the like are further included. The TEID flag occupies 1 bit. If the bit is set to 1, it indicates that the TEID field exists. The version field occupies 3 bits, indicating a version number of the GPT protocol. The message type field occupies 8 bits, indicating a type of a GTP message. The total length field occupies 16 bits, indicating a length of a message body.

The GTP header and an original data frame are together used as UDP data. The UDP header occupies 8 bytes. The UDP header includes a source port number, a destination port number, a UDP length, and a UDP checksum. Each field occupies 16 bits. Optionally, the destination port number (Dest Port) is fixed at 2152, and the source port number (Source Port) is determined by performing a hash algorithm on the original data frame.

It may be learned from the foregoing descriptions that, when the VXLAN packet or the GTP packet is transmitted in the IPv6 network, if the VXLAN header or the GTP header is encapsulated in a UDP encapsulation manner, an additional UDP header needs to be encapsulated. As a result, an amount of encapsulated data is large, encapsulation efficiency is low, and packet transmission efficiency is affected.

Based on this, an embodiment of this application provides a packet transmission method. When a packet is transmitted in an IPv6 network, a tunnel header corresponding to the packet is encapsulated in an IPv6 header, and no additional UDP header needs to be encapsulated. This improves encapsulation efficiency.

To facilitate understanding of the technical solutions provided in embodiments of this application, the following describes the technical solutions with reference to the accompanying drawings.

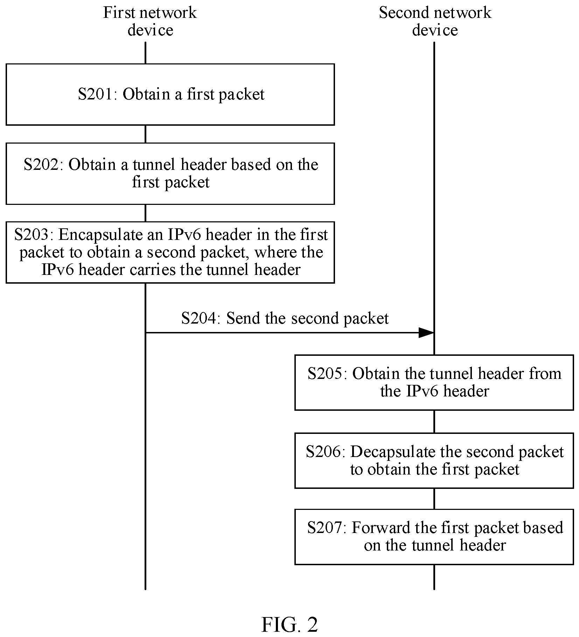

FIG. 2 is a flowchart of a packet transmission method according to an embodiment of this application. As shown in FIG. 2, the method includes the following steps.

S201: A first network device obtains a first packet.

S202: The first network device obtains a tunnel header based on the first packet.

In this embodiment, the first network device may be the switch 1 in FIG. 1a. The first network device may receive the first packet sent by a host or the source server in FIG. 1a, or the first network device generates the first packet. After the first packet is obtained, the tunnel header corresponding to the first packet is obtained based on the first packet. Specifically, after receiving the first packet, the first network device may obtain, based on an interface for receiving the first packet, the tunnel header corresponding to the first packet. The tunnel header corresponds to the interface for receiving the first packet. For example, the tunnel header may be configured on the interface of the first network device in advance. After receiving the first packet through the interface, the first network device obtains the tunnel header based on the correspondence between the interface and the tunnel header. Alternatively, after receiving the first packet, the first network device may obtain, based on an address (a source address) in the first packet, the tunnel header corresponding to the first packet. For example, the correspondence between the address and the tunnel header is configured on the first network device in advance. After receiving the first packet, the first network device determines, based on the address of the first packet and the correspondence, the tunnel header corresponding to the address.

The tunnel header includes one or more of a VXLAN header, a GTP header, a GRE header, an IP-in-IP header, an ISATAP header, an IPv4 over IPv6 header, an NVGRE header, an L2TPv3, and an MPLS in GRE header.

S203: The first network device encapsulates an IPv6 header in the first packet to obtain a second packet.

After determining the tunnel header corresponding to the first packet, the first network device encapsulates the IPv6 header in the first packet, where the tunnel header is carried in the IPv6 header, to obtain the second packet. The IPv6 header may include an IPv6 basic header and an IPv6 extension header. Some tunnel headers, such as a VXLAN header and a GTP header, may occupy few bits, and may be carried by using the IPv6 basic header. Tunnel headers that occupy a large quantity of bits cannot be carried by using the IPv6 basic header, and therefore are carried by using the IPv6 extension header.

(1) The IPv6 header is the IPv6 extension header.

Optionally, when encapsulating the IPv6 header in the first packet, the first network device may encapsulate the IPv6 basic header and the IPv6 extension header in the first packet.

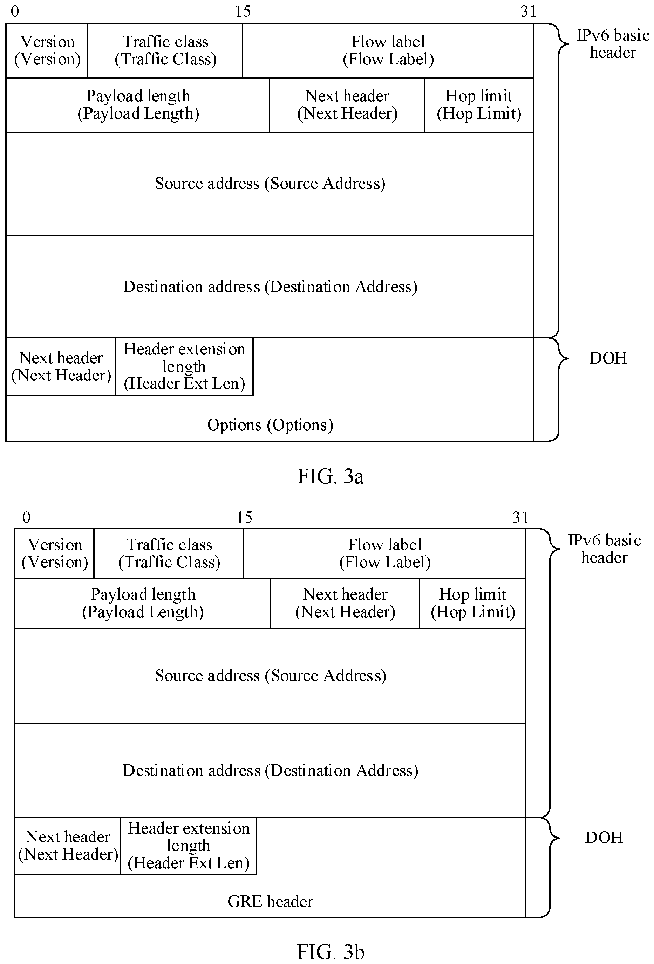

When the IPv6 header is the IPv6 extension header, the IPv6 extension header may be used to carry the tunnel header. The IPv6 extension header may include a hop-by-hop option header (hop-by-hop option header, HBH), a DOH, a routing header (routing header, RH), an SRH, or the like. A format of the DOH is shown in FIG. 3a. The DOH includes a next header (Next Header) field, a header extension length (Hdr Ext Len) field, and an options (Options) field.

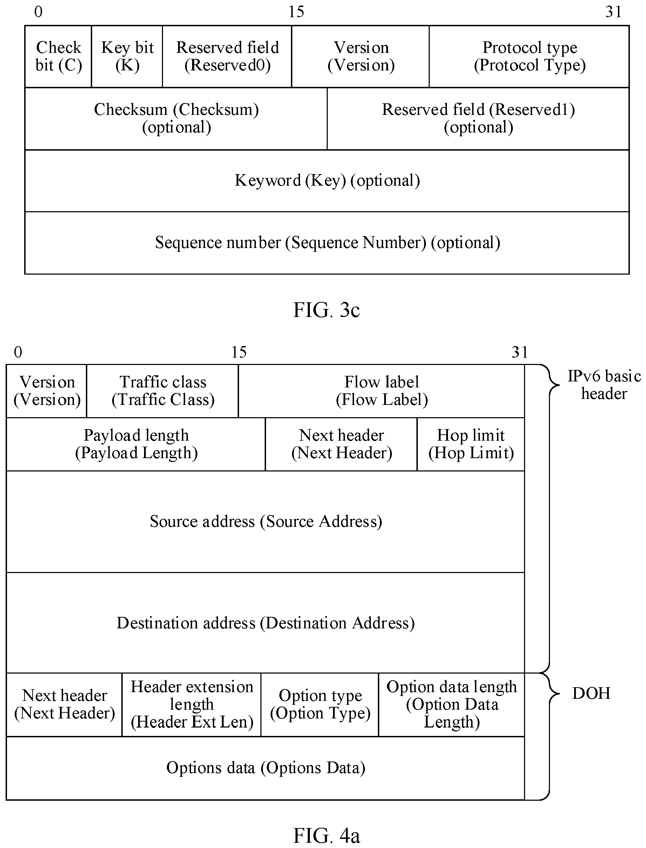

In an implementation, the tunnel header is carried in the DOH of the IPv6 extension header. When the DOH is used to carry the tunnel header, the options field in the DOH is used to carry the tunnel header. As shown in FIG. 3b, the options field is used to carry a GRE header, and the GRE header occupies 128 bits. As shown in FIG. 3c, the GRE header includes a check bit C, a key bit K, a reserved (Reserved0) field, an encapsulation (Recursion) layer number field, a flags (flags) field, a version (Version) field, a protocol type (Protocol Type) field, a checksum (Checksum) field, a reserved (Reserved1) field, a keyword (Key) field, and a sequence number (Sequence Number) field.

Optionally, "Options" in the DOH includes a type-length-value (type-length-value, TLV), and a type field in the TLV indicates that the DOH carries the tunnel header. For example, it may be specified that when the type field T is 1, it indicates that the DOH carries the tunnel header. After receiving the second packet, another network device may determine, based on T=1, that the second packet includes the tunnel header.

Optionally, "Options" in the DOH includes a TLV, and a type field of the TLV indicates that the DOH carries the tunnel header. The TLV may be an enhanced TLV. As shown in FIG. 4a, the TLV includes an option type (Option Type) field, an option data length (Option Data Length) field, and an options data (Options Data) field.

Optionally, the option type field and the option data length field each occupy 8 bits, and the options data field occupies 128 bits.

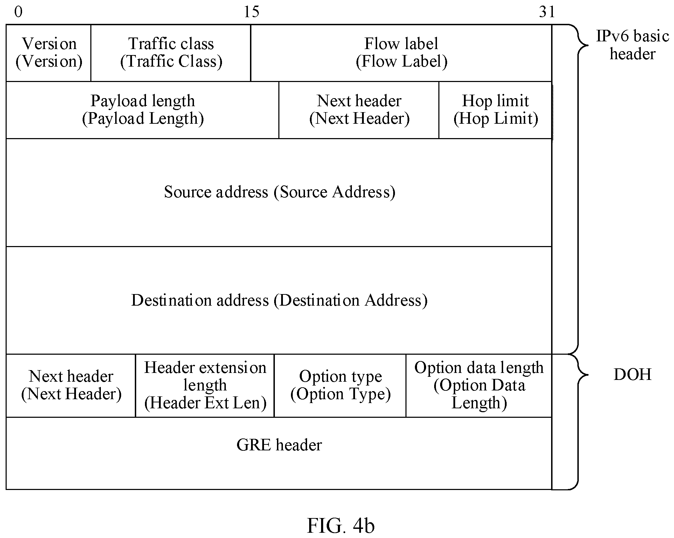

Optionally, the tunnel header may be carried in the options data field, as shown in FIG. 4b. Specifically, the tunnel header may be completely copied to the options data field.

In some application scenarios, the packet may be forwarded based on a part or all of a pre-specified path. A segment routing (segment routing, SR) protocol is a source routing protocol. A source node specifies a path for an application packet, converts the path into an ordered segment (Segment) list, and encapsulates the list in a header. When SR is deployed on an IPv6 data plane, the SR is referred to as SRv6. During SRv6 application, forwarding path information is carried in an SRH that includes a SID list. The SID list includes a plurality of segment lists (segment lists) arranged in sequence, respectively indicating a plurality of segments. Each segment is instructions or an instruction set for packet processing. The SRH is encapsulated in the packet, and a segment identifier list in the SRH carries a process of processing the packet by an SR network. For example, in the application scenario shown in FIG. 1a, the specified path includes the switch 1 and the switch 2. In this case, a SID corresponding to the switch 1 and a SID corresponding to the switch 2 are added to the SID list carried in the SRH.

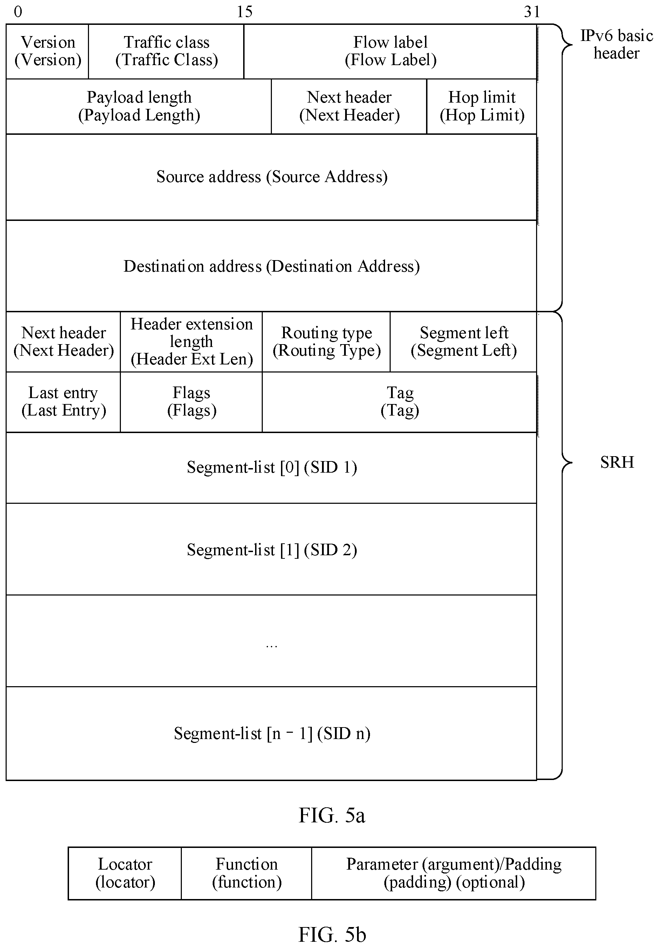

In another implementation, when the tunnel header is the VXLAN header or the GTP header, the IPv6 extension header further includes a segment routing header SRH, and the tunnel header may be carried in a segment identifier list SID list of the SRH. A format of the SRH is shown in FIG. 5a. The SRH includes a next header (Next Header) field, a header extension length (Header Ext Len) field, a routing type (Routing Type) field, a segment left (Segment Left) field, a last entry (Last Entry) field, a flags (Flags) field, a tag (Tag) field, and the SID list. The SID list includes a plurality of sequentially arranged elements: a segment list [0] to a segment list [n-1]. Each element is a SID, and a length of each element is 128 bits. In FIG. 5a, the segment list [0] corresponds to a segment that is executed first, and the segment list [n-1] corresponds to a segment that is executed last.

A format of the SID is shown in FIG. 5b. The SID may include a locator (locator) field and a function (function) field. The SID may further include a parameter (argument) field and/or a padding (padding) field that are/is following the function field. Content of the locator field may also be referred to as a locator for short, is an identifier allocated to a network node in a network topology, and identifies the network node in the network topology. Content of the function field may also be referred to as a function for short, indicates instructions or an instruction set for packet processing, and is equivalent to operation codes of computer instructions. When the instructions or the instruction set indicated by the function is executed on the network node, the network node is enabled to perform a corresponding forwarding behavior (behavior). Content of the argument field may also be referred to as an argument for short, and indicates a parameter used in execution of the instructions or the instruction set indicated by the function.

If the VXLAN header or the GTP header is carried in the SID list, the following cases may be included.

### Case 1:

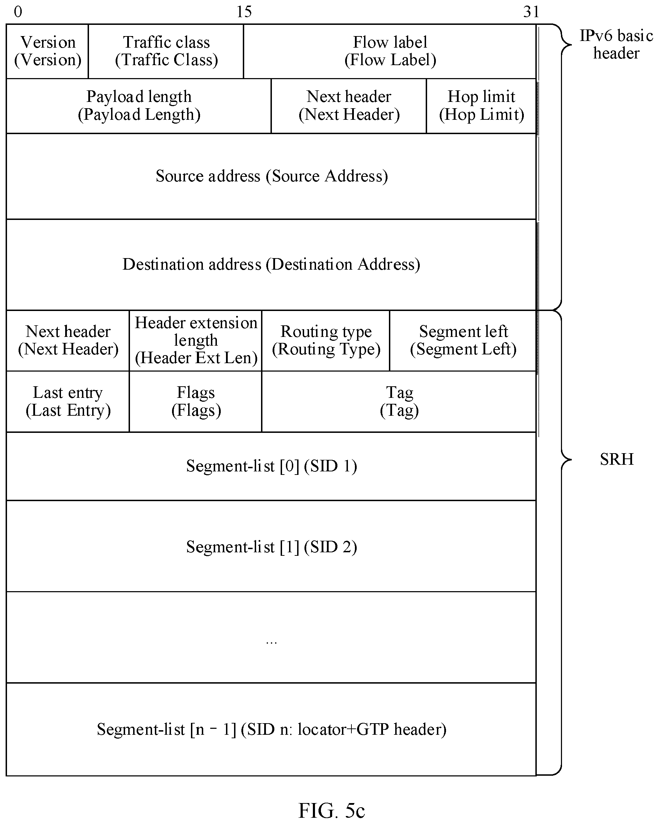

The tunnel header is carried in a SID corresponding to the second network device in the SID list. To be specific, the tunnel header is carried in a function (function) field of the SID of the second network device. When the SID of the second network device is used to carry the tunnel header, the SID of the second network device may be used to carry the tunnel header. As shown in FIG. 5c, the SID list includes a SID 1 to a SID n, and the SID of the second network device is the SID n. The SID n includes a locator and the GTP header. The locator is an address of the second network device, and the tunnel header may occupy the 64^{th} bit to the 128^{th} bit in the SID of the second network device. The SID of the second network device indicates the second network device to forward the packet based on the tunnel header carried in the SID.

### Case 2:

The tunnel header is carried in a segment list in which a SID of a network device other than the second network device is located. For example, if the SID of the second network device in the SID list is a SID 3, the tunnel header is carried in a SID 4 in the SID list. That is, the tunnel header is carried in another SID. In this case, the another SID may be used to carry the tunnel header. For a carrying manner, refer to FIG. 5c. The SID of the second network device indicates the second network device to read the tunnel header from the another SID, and forward the packet based on the tunnel header.

In this embodiment, because the second network device needs to forward the packet based on the tunnel header, when advertising the SID of the second network device, the second network device may notify that a type of the SID of the second network device is END.VN. The SID is an SRv6 SID. A locator part of the SID includes an address of a destination tunnel endpoint, and a function part of the SID includes the tunnel header. Forwarding actions corresponding to a behavior of the SID include: After receiving the packet, the destination tunnel endpoint obtains a corresponding instance forwarding table based on the tunnel header in the SID, decapsulates the packet, searches the forwarding table based on a MAC address and the like in a payload, and forwards the packet. Optionally, a SID corresponding to an address of the second network device is a SID of END.VN type. Optionally, the SID corresponding to the address of the second network device is an SRv6 locator of the second network device.

During specific implementation, after establishing an interior gateway protocol (Interior Gateway Protocol, IGP) session or a border gateway protocol (Border Gateway Protocol, BGP) session with the first network device, the second network device may advertise the SID of the second network device and a type corresponding to the SID to the first network device by using the IGP or the BGP. The first network device stores the SID of the second network device and the type corresponding to the SID. When needing to forward a VXLAN packet or a GTP packet to the second network device, the first network device may encapsulate the tunnel header corresponding to the packet in the IPv6 header based on the type of the SID of the second network device. When advertising the SID, the second network device locally establishes a forwarding table, and the forwarding table includes a match item and an action item. The match item includes the SID of the second network device. The action item indicates the second network device to decapsulate the packet and forward the packet based on the tunnel header carried in the packet.

### (2) The IPv6 header is the IPv6 basic header.

When the tunnel header is a VXLAN header or a GTP header, the IPv6 header may be the IPv6 basic header. That is, the VXLAN header or the GTP header may be carried in a destination address field of the IPv6 basic header. Usually, a length of the destination address field in the IPv6 basic header is 128 bits, and the field is used to carry an address of a destination network device. Optionally, in a packet forwarding process, prefix information of the destination network device usually does not need to occupy the entire destination address field. For example, the prefix information of the destination network device needs to occupy only 64 bits of the destination address field. Optionally, the address of the destination network device may be compressed to 64 bits, and occupies the 1^{st} bit to the 64^{th} bit. In this way, the VXLAN header or the GTP header may occupy the 65^{th} bit to the 128^{th} bit in the destination address field. A location occupied by the tunnel header in the destination address field may be determined based on an actual application situation. This is not limited in this embodiment.

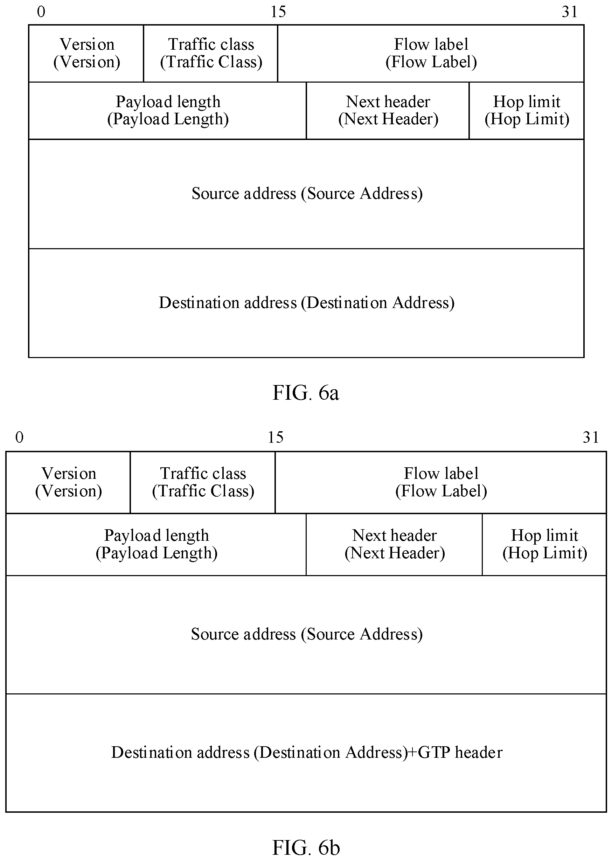

FIG. 6a shows a packet format of the IPv6 basic header. The IPv6 basic header includes a version (Version) field, a traffic type (Traffic Type) field, a flow label (Flow Label) field, a payload length (Payload Length) field, a next header (Next Header) field, a hop limit (Hop Limit) field, a source address (source address, SA) field, and a destination address (destination address, DA) field. The source address field and the destination address field each occupy 128 bits. The source address field includes a source address, and the destination address field includes a destination address.

Optionally, the destination address field may include the destination address and the tunnel header. As shown in FIG. 6b, the destination address field includes the destination address and the GTP header.

The destination address field is usually used to carry a destination address of the packet. After receiving the packet, a destination network device indicated by the destination address reads the destination address from the destination address field, and forwards the packet based on the destination address. In this embodiment, the destination address field includes not only the destination address, but also includes the tunnel header. The tunnel header indicates the destination network device to forward the packet. To enable the destination network device to forward the packet based on the tunnel header after receiving the packet, the device (the second network device) indicated by the destination address in the destination address field needs to be notified in advance to forward the second packet based on the tunnel header carried in the destination address field after receiving the packet.

It may be learned from the foregoing descriptions that the IPv6 basic header may be used to carry the tunnel header, or the IPv6 extension header may be used to carry the tunnel header. In either manner, no additional UDP header needs to be encapsulated. This reduces an amount of data for packet encapsulation, and improves packet encapsulation efficiency.

In addition, a flow label in the IPv6 header may correspond to a port number of the packet. The port number may be used to not only perform load balance processing in a forwarding process of the second packet, but also determine a type of the second packet. For example, when the port number carried in the flow label is 4789, it may be identified, based on the port number, that a received packet includes the VXLAN packet. The port number may be a preset fixed port number, or may be a port number obtained through dynamic calculation based on a payload of the first packet.

To implement an in-situ flow information telemetry (in-situ flow information telemetry, IFIT) function, when the IPv6 header is encapsulated in the first packet, IFIT instructions may be carried in the IPv6 header, to implement hop-by-hop network in-situ flow information telemetry, or network in-situ flow information telemetry of a specified node or a destination node. Specifically, the IFIT instructions may be carried in the IPv6 extension header.

S204: The first network device sends the second packet to the second network device.

In this embodiment, after obtaining the second packet by encapsulating the IPv6 header in the first packet, the first network device sends the second packet to the second network device. The second network device may be an end node in a network. For example, the second network device is the switch 2 in FIG. 1a. The destination address field in the IPv6 header of the second packet includes the address of the second network device or the SRv6 locator of the second network device, instead of a host address. For example, in FIG. 1a, the destination address field in the IPv6 header of the second packet includes an address of the switch 2 or an SRv6 locator of the switch 2.

S205: The second network device receives the second packet, and obtains the tunnel header from the IPv6 header of the second packet.

It may be learned from the foregoing descriptions that some tunnel headers may be carried in the IPv6 basic header, and some tunnel headers may be carried in the IPv6 extension header. When the tunnel header is carried in different IPv6 headers, the second network device obtains the tunnel header from the IPv6 header in different manners.

When the tunnel header is the VXLAN header or the GTP header, the tunnel header may be carried in the destination address field of the IPv6 basic header. After receiving the second packet sent by the first network device, the second network device determines whether the destination address field includes the address of the second network device. If the destination address field includes the address of the second network device, the tunnel header is obtained from the destination address field.

It should be noted that, because the address of the second network device needs to be encapsulated in the second packet, before the second network device receives the second packet sent by the first network device, the second network device needs to advertise the address of the second network device to the first network device. The address of the second network device indicates the second network device to forward the packet based on the tunnel header carried in the destination address field when receiving the second packet. When advertising the address of the second network device to the first network device, the second network device locally establishes a forwarding entry, and the forwarding entry may include a match item and an action item. The match item includes the address of the second network device. The action item indicates that after matching succeeds by using the match item, the tunnel header is obtained from the destination address field, the second packet is decapsulated, and the decapsulated packet is forwarded based on the tunnel header.

When the tunnel header is carried in the DOH of the IPv6 extension header, after receiving the second packet sent by the first network device, the second network device determines whether the destination address field includes the address of the second network device. If the destination address field includes the address of the second network device, it is determined whether the type field of the TLV in the DOH indicates that the tunnel header is carried. If the type field of the TLV indicates that the tunnel header is carried, the tunnel header is obtained from the DOH. When the tunnel header is carried in the DOH, the second network device may obtain the tunnel header by parsing the DOH.

When the tunnel header is carried in the SID corresponding to the second network device in the SID list of the SRH in the IPv6 extension header, after receiving the second packet, the second network device determines whether the destination address field of the second packet includes the SID of the second network device. If the destination address field of the second packet includes the SID of the second network device, the second network device obtains the tunnel header from the SID of the second network device carried in the second packet.

When the tunnel header is carried in another corresponding SID (a SID of a network device other than the second network device) in the SID list of the SRH in the IPv6 extension header, after receiving the second packet, the second network device determines whether the destination address field of the second packet includes the SID of the second network device. If the destination address field of the second packet includes the SID of the second network device, the second network device obtains the tunnel header from the another SID carried in the second packet. For example, a field or a new field in the SRH may be used to indicate the second network device to obtain the tunnel header from a specified SID, or it is predefined that the tunnel header is carried in a next SID adjacent to the SID of the second network device. In this case, after receiving the second packet, the second network device reads the next SID from the SID list, and obtains the tunnel header from the next SID.

It should be noted that, because the SID of the second network device needs to be encapsulated in the second packet, before the second network device receives the second packet sent by the first network device, the second network device needs to advertise the SID of the second network device to the first network device. In addition, a type of the SID of the second network device may be further advertised. The type corresponding to the SID of the second network device may be defined as END.VN, and indicates the second network device to obtain, after receiving the corresponding packet, the tunnel header from the packet, decapsulate the packet, search the forwarding table based on the tunnel header, and forward the decapsulated packet based on the forwarding table. The SID of the second network device may be the address of the second network device, or a corresponding address obtained after the address of the second network device is compressed.

When advertising the SID of the second network device to the first network device, the second network device may further locally establish the forwarding entry. The forwarding entry includes the match item and the action item. The match item includes the SID of the second network device, and the action item indicates an action that needs to be performed when matching succeeds. For example, the action item indicates to decapsulate the second packet when the matching succeeds, and forward the decapsulated packet based on a tunnel identifier in the tunnel header.

S206: The second network device decapsulates the second packet to obtain the first packet.

In this embodiment, after obtaining the tunnel, when determining, based on information in the encapsulated IPv6 header, that the second network device is an end node, the second network device decapsulates the second packet, removes the encapsulated IPv6 header, and obtains the first packet. For example, when the second network device determines that the destination address field in the IPv6 header of the second packet includes the SID of the second network device, the second network device decapsulates the second packet based on the action item in the forwarding entry to obtain the first packet. The decapsulating the packet includes: removing the IPv6 basic header encapsulated in the second packet to obtain the first packet, or removing the IPv6 basic header and the IPv6 extension header encapsulated in the second packet to obtain the first packet.

An execution sequence of S205 and S206 is not limited in this embodiment. S206 may be performed before S205, S205 may be performed before S206, or S205 and S206 may be performed simultaneously.

S207: The second network device forwards the first packet based on the tunnel header.

After obtaining the first packet, the second network device determines a forwarding path based on the tunnel header, and forwards the first packet based on the forwarding path. Specifically, the second network device obtains a corresponding forwarding table on the tunnel header, searches the forwarding table for a forwarding entry based on the destination address in the first packet, and forwards the first packet based on the forwarding entry. It should be noted that, when the first packet is a layer 2 packet, the corresponding destination address is a MAC address, and the obtained forwarding table is a MAC table. When the first packet is a layer 3 packet, the corresponding destination address is an IP address, and the obtained forwarding table is a routing table.

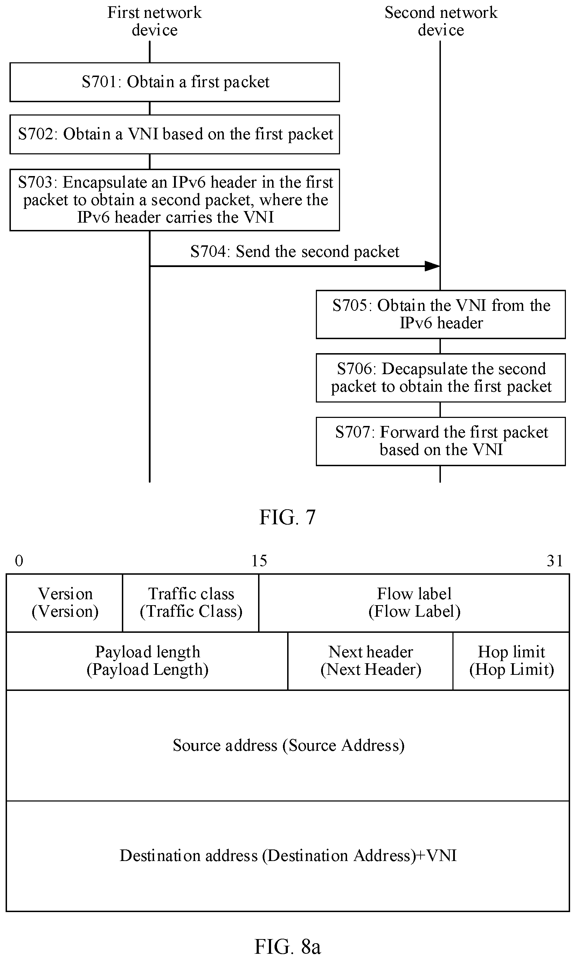

FIG. 7 is a flowchart of a VXLAN packet transmission method according to an embodiment of this application. As shown in FIG. 7, the method includes the following steps.

S701: A first network device obtains a first packet.

S702: The first network device obtains a VNI based on the first packet.

In this embodiment, the first network device may be the switch 1 in FIG. 1a. The first network device may receive the first packet sent by a host or the source server in FIG. 1a, or the first network device generates the first packet. After the first packet is obtained, the VNI corresponding to the first packet is obtained based on the first packet. The VNI is a tenant identifier corresponding to a device that sends the first packet. Specifically, after receiving the first packet, the first network device may obtain, based on an interface for receiving the first packet, the VNI corresponding to the first packet. The VNI corresponds to the interface for receiving the first packet. For example, the VNI may be configured on the interface of the first network device in advance. After receiving the first packet through the interface, the first network device obtains the VNI based on the correspondence between the interface and the VNI. Alternatively, after receiving the first packet, the first network device may obtain, based on an address (a source address) in the first packet, the VNI corresponding to the first packet. For example, the correspondence between the address and the VNI is configured on the first network device in advance. After receiving the first packet, the first network device determines, based on the address of the first packet and the correspondence, the VNI corresponding to the address.

S703: The first network device encapsulates an IPv6 header in the first packet to obtain a second packet.

After determining the VNI corresponding to the first packet, the first network device encapsulates the IPv6 header in the first packet, where the VNI is carried in the IPv6 header, to obtain the second packet. There are two manners in which the IPv6 header carries the VNI. In one manner, the IPv6 header directly carries the VNI. In the other manner, the IPv6 header includes a VXLAN header, and the VXLAN header includes the VNI.

Optionally, the IPv6 header is an IPv6 basic header or an IPv6 extension header, and the VNI may be carried in the IPv6 basic header or the IPv6 extension header. Alternatively, the VXLAN header may be carried in the IPv6 basic header or the IPv6 extension header. The IPv6 basic header includes basic packet forwarding information, and a length is 40 bytes.

### (1) The IPv6 header is the IPv6 basic header.

When the IPv6 header is the IPv6 basic header, the VNI may be carried in a destination address field of the IPv6 basic header. Usually, a length of the destination address field in the IPv6 basic header is 128 bits, and the field is used to carry an address of a destination network device. Optionally, in a packet forwarding process, prefix information of the destination network device usually does not need to occupy the entire destination address field. For example, the prefix information of the destination network device needs to occupy only 64 bits of the destination address field. Optionally, the address of the destination network device may be compressed to 64 bits, and occupies the 1^{st} bit to the 64^{th} bit. In this way, the VNI may occupy the 65^{th} bit to the 128^{th} bit in the destination address field. Alternatively, the VNI may occupy the 80^{th} bit to the 128^{th} bit in the destination address field. A location occupied by the VNI in the destination address field may be determined based on an actual application situation. This is not limited in this embodiment.

Optionally, the destination address field may include a destination address and the VNI, as shown in FIG. 8a.

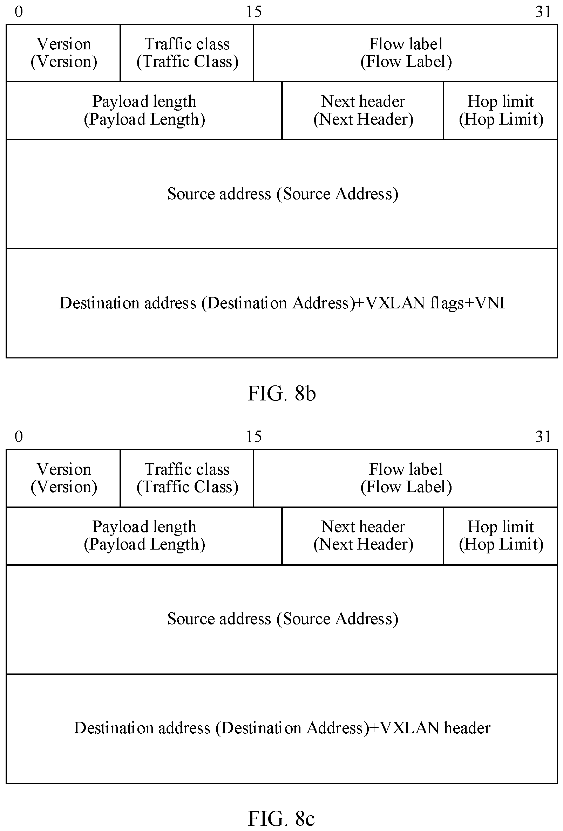

In addition, the IPv6 header may further include VXLAN flags, and the VXLAN flags include a flag indicating that the second packet carries a valid VNI. A length of the VXLAN flags is 8 bits, and the 5^{th} bit indicates that the packet carries the valid VNI. For example, when the 5^{th} bit is 1, it indicates that the second packet carries the valid VNI. The VXLAN flags may be carried in the destination address field. As shown in FIG. 8b, the destination address field includes the destination address, the VXLAN flags, and the VNI.

For the VNI carried in the destination address field of the IPv6 basic header, there is another carrying manner. To be specific, the destination address field includes the VXLAN header, and the VXLAN header carries the VNI. That is, the VXLAN header is encapsulated in the destination address field of the IPv6 basic header. A length of the VXLAN header is 64 bits. The destination address usually occupies the 1^{st} bit to the 64^{th} bit in the destination address field. In this case, the VXLAN header may be located in the 65^{th} bit to the 128^{th} bit of the destination address field. The VXLAN header includes the VXLAN flags. To be specific, the destination address field in the IPv6 basic header includes the destination address and the VXLAN header, and the VXLAN header includes the VNI and the VXLAN flags, as shown in FIG. 8c.

The destination address field is usually used to carry the destination address of the packet. After receiving the packet, the destination network device indicated by the destination address reads the destination address from the destination address field, and forwards the packet based on the destination address. In this embodiment, the destination address field includes not only the destination address, but also the VNI. The VNI indicates the destination network device to forward the packet. To enable the destination network device to forward the packet based on the VNI after receiving the packet, the device (the second network device) indicated by the destination address in the destination address field needs to be notified in advance to forward the second packet based on the VNI carried in the destination address field after receiving the packet.

### (2) The IPv6 header is the IPv6 extension header.

Optionally, when encapsulating the IPv6 header in the first packet, the first network device may encapsulate the IPv6 basic header and the IPv6 extension header in the first packet.

When the IPv6 header is the IPv6 extension header, the IPv6 extension header may be used to carry the VNI. The IPv6 extension header may include an HBH, a DOH, an RH, an SRH, or the like. A format of the DOH is shown in FIG. 3a.

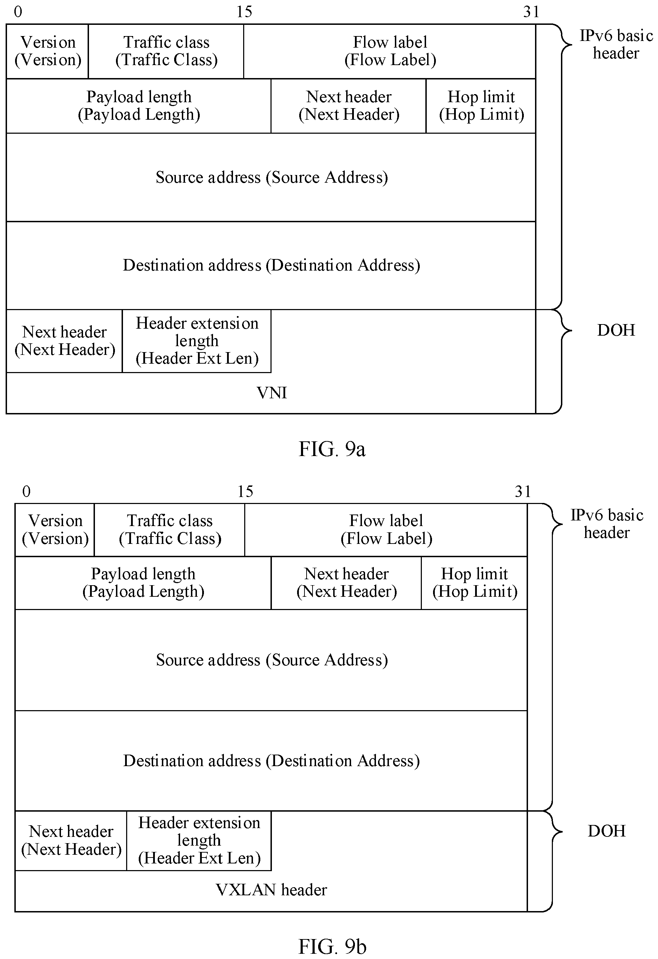

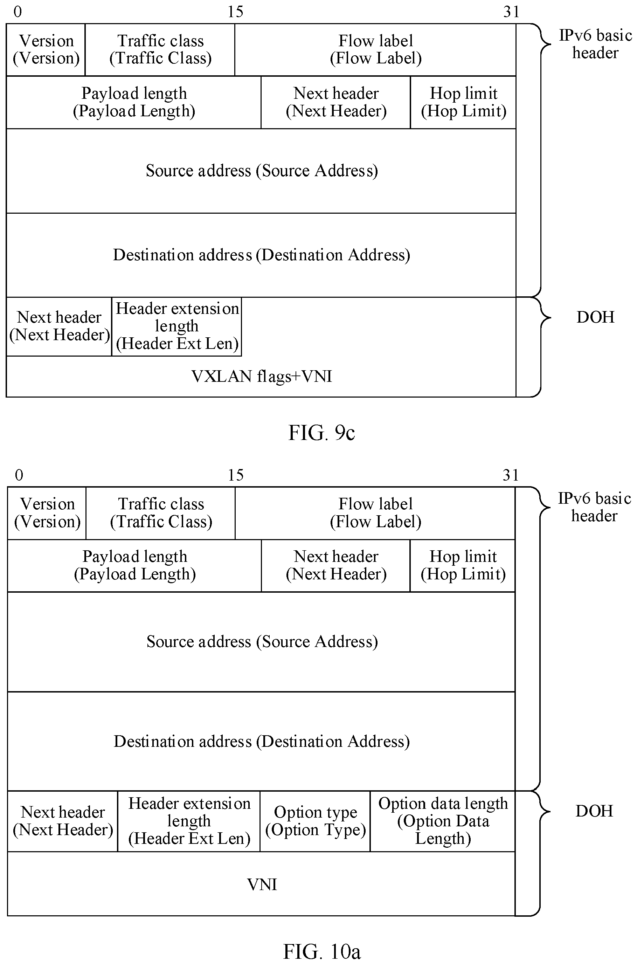

In an implementation, the VNI is carried in the DOH of the IPv6 extension header. When the DOH is used to carry the VNI, the options field in the DOH may be used to directly carry the VNI, as shown in FIG. 9a. Alternatively, the options field in the DOH may be used to carry the VXLAN header, and the VXLAN header carries the VNI, as shown in FIG. 9b. When the IPv6 extension header further includes VXLAN flags (flags), the options field in the DOH may be used to directly carry the VXLAN flags, as shown in FIG. 9c. Alternatively, the options field in the DOH may be used to carry a VXLAN header, and the VXLAN header carries the VNI and the VXLAN flags. Specifically, the VXLAN header may be completely copied to the options field.

Optionally, "Options" in the DOH includes a type-length-value TLV, and a type field in the TLV indicates that the DOH carries the VNI. For example, it may be specified that when the type field T is 1, it indicates that the DOH carries the VNI. After receiving the second packet, another network device may determine, based on T=1, that the second packet includes the VNI.

Optionally, "Options" in the DOH includes a TLV, and a type of the TLV indicates that the DOH carries the VXLAN header. The TLV may be an enhanced VXLAN TLV, and the VXLAN TLV may also be referred to as a VN option TLV. The VN (VXLAN) option TLV includes an option type (Option Type) field, an option data length (Option Data Length) field, and an options data (Option Data) field. For a specific structure, refer to FIG. 4a. The option type field identifies that the TLV is a VN option, and specifically identifies that the VN option carries the VNI, or identifies that the VN option carries the VXLAN header.

Optionally, the VNI may be carried in the options data field, as shown in FIG. 10a.

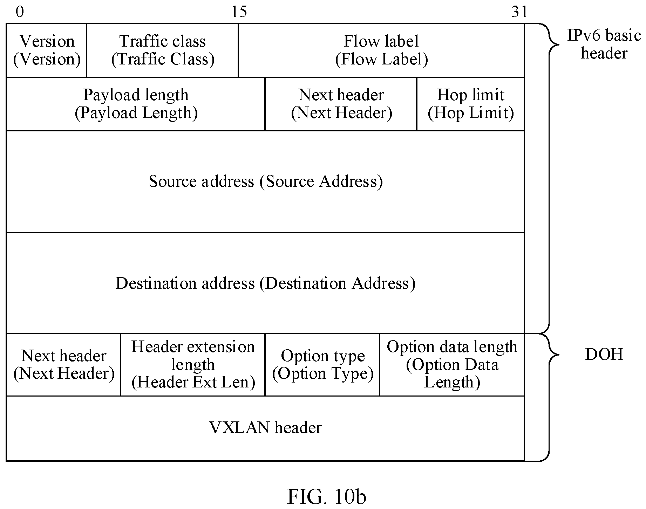

Optionally, the VXLAN header may be carried in the options data field, as shown in FIG. 10b.

In another implementation, when the VNI is carried in the SRH, the VNI may be carried in a SID list of the SRH. A format of the SRH is shown in FIG. 5a, and a format of a SID is shown in FIG. 5b.

If the VNI is carried in the SID list, the following cases may be included.

### Case 1:

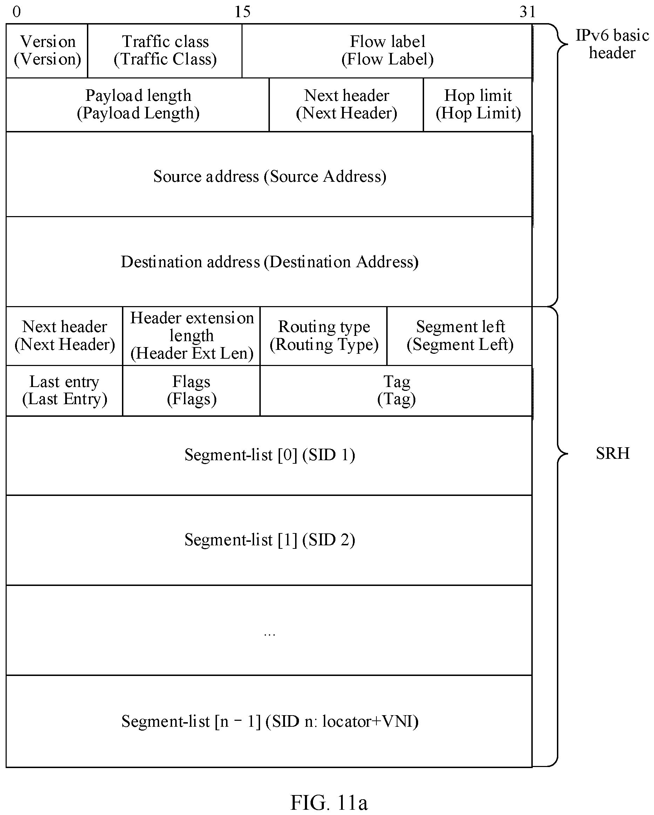

The VNI is carried in a SID corresponding to the second network device in the SID list. To be specific, the VNI is carried in a function (function) field of the SID of the second network device. When the SID of the second network device is used to carry the VNI, the SID of the second network device may be used to directly carry the VNI. As shown in FIG. 11a, the SID list includes a SID 1 to a SID n, and the SID of the second network device is the SID n. The SID n includes a locator and the VNI. The locator is an address of the second network device. For example, the VNI occupies the 64^{th} bit to the 128^{th} bit in the SID of the second network device, or occupies the 80^{th} bit to the 128^{th} bit in the SID of the second network device. When the SID n further includes a parameter (argument), the SID n includes the locator, the VNI, and the argument. In this case, the VNI occupies the 64^{th} bit to the 87^{th} bit in the SID of the second network device.

Alternatively, the SID of the second network device is used to carry the VXLAN header, and the VXLAN header includes the VNI. As shown in FIG. 1 1b, the SID of the second network device is the SID n, and the SID n includes the locator and the VXLAN header. Specifically, the VXLAN header may occupy the 64^{th} bit to the 128^{th} bit in the SID of the second network device. The SID of the second network device indicates the second network device to forward the packet based on the VNI carried in the SID.

### Case 2:

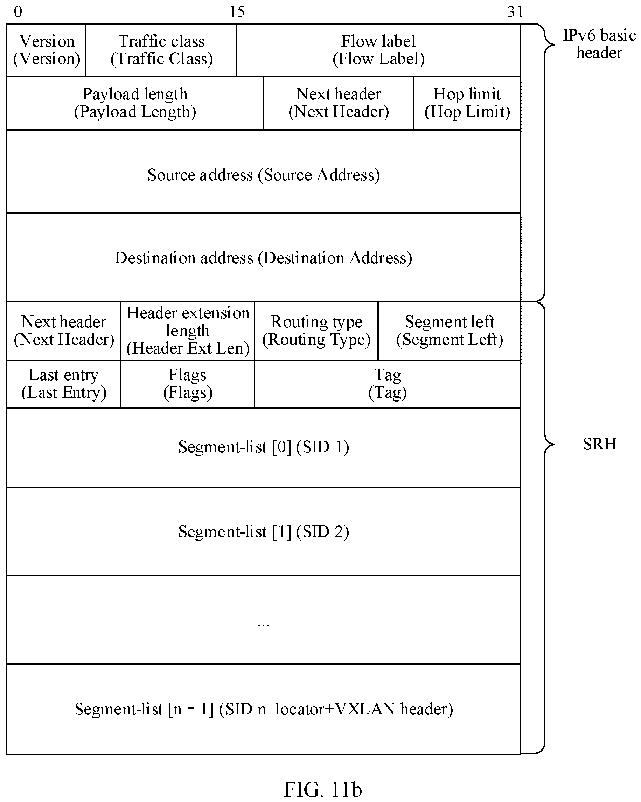

The VNI is carried in a segment list in which a SID of a network device other than the second network device is located. For example, if the SID of the second network device in the SID list is a SID 3, the VNI is carried in a SID 4 in the SID list. That is, the VNI is carried in another SID. In this case, the another SID may be used to directly carry the VNI. For a carrying manner, refer to FIG. 11a. Alternatively, the another SID may be used to carry the VXLAN header, and the VXLAN header includes the VNI. For a carrying manner, refer to FIG. 11b. The SID of the second network device indicates the second network device to read the VNI from the another SID, and forward the packet based on the VNI.

In this embodiment, because the second network device needs to forward the packet based on the VNI, when advertising the SID of the second network device, the second network device may notify that a type of the SID of the second network device is an END.VN type. The SID is an SRv6 SID. A locator part of the SID includes a VTEP address corresponding to the VXLAN packet or an SRv6 locator of the VTEP, and a function part of the SID includes the VNI or the VXLAN header. Forwarding actions corresponding to a behavior related to the SID include: after the packet reaches a destination VTEP node, obtaining a corresponding VXLAN instance forwarding table based on the VNI carried in the SID of the packet, decapsulating the packet, searching the forwarding table based on a MAC address and the like in a payload, and forwarding the packet. Optionally, a SID corresponding to an address of the second network device is a SID of END.VN type. Optionally, the SID corresponding to the address of the second network device is an SRv6 locator of the second network device.

During specific implementation, after establishing an IGP session or a BGP session with the first network device, the second network device may advertise the SID of the second network device and a type corresponding to the SID to the first network device by using the IGP or the BGP. The first network device stores the SID of the second network device and the type corresponding to the SID. When needing to forward the VXLAN packet to the second network device, the first network device may encapsulate the VNI corresponding to the packet in the IPv6 header based on the type of the SID of the second network device. When advertising the SID, the second network device locally establishes a forwarding table, and the forwarding table includes a match item and an action item. The match item includes the SID of the second network device. The action item indicates the second network device to decapsulate the packet and forward the packet based on the VNI carried in the packet.

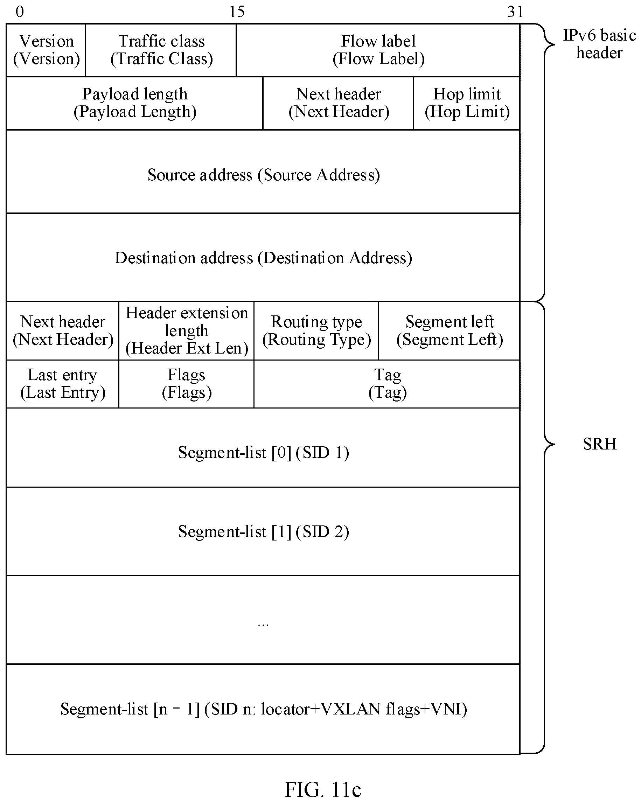

When the IPv6 header further includes the VXLAN flags (flags), the flags may be carried in the SID of the second network device, for example, the flags and the VNI are encapsulated in the SID n in FIG. 11c. When the SID n further includes the parameter (argument), the SID n includes the locator, the VXLAN flags, the VNI, and the argument.

It may be learned from the foregoing descriptions that the IPv6 basic header may be used to carry the VNI, or the IPv6 extension header may be used to carry the VNI. In either manner, no additional UDP header needs to be encapsulated. This reduces an amount of data for packet encapsulation, and improves packet encapsulation efficiency.

In addition, a flow label in the IPv6 header may correspond to a destination port number of the VXLAN packet. The destination port number may be used to not only perform load balance processing in a forwarding process of the second packet, but also determine that the second packet includes the VXLAN packet. For example, when the port number carried in the flow label is 4789, it may be identified, based on the port number, that a received packet includes the VXLAN packet. The port number may be a preset fixed port number, or may be a port number obtained through dynamic calculation based on a payload of the first packet. Optionally, a method for calculating the flow label of the second packet is the same as that for calculating a UDP source port used for load balance in the VXLAN packet, and a port number value obtained from the VXLAN packet may be carried in the flow label of the second packet.

To implement an IFIT function, when the IPv6 header is encapsulated in the first packet, IFIT instructions may be carried in the IPv6 header, to implement hop-by-hop network in-situ flow information telemetry, or network in-situ flow information telemetry of a specified node or a destination node. Specifically, the IFIT instructions may be carried in the IPv6 extension header.

S704: The first network device sends the second packet to the second network device.

In this embodiment, after obtaining the second packet by encapsulating the IPv6 header in the first packet, the first network device sends the second packet to the second network device. The second network device may be an end node in a VXLAN network. For example, the second network device is the switch 2 in FIG. 1a. The destination address field in the IPv6 header of the second packet includes the address of the second network device or the SRv6 locator of the second network device. For example, in FIG. 1a, the destination address field in the IPv6 header of the second packet includes an address of the switch 2 or an SRv6 locator of the switch 2.

S705: The second network device receives the second packet, and obtains the VNI from the IPv6 header of the second packet.

It may be learned from the foregoing descriptions that the VNI may be carried in the IPv6 basic header or the IPv6 extension header. When the VNI is carried in different IPv6 headers, the second network device obtains the VNI from the IPv6 header in different manners.

When the VNI is carried in the destination address field of the IPv6 basic header, after receiving the second packet sent by the first network device, the second network device determines whether the destination address field includes the address of the second network device. If the destination address field includes the address of the second network device, the VNI is obtained from the destination address field. When the VNI is directly carried in the destination address field, the second network device may obtain the VNI by parsing the destination address field. When the VNI is carried in the VXLAN header and the VXLAN header is carried in the destination address field, the second network device needs to first parse the destination address field to obtain the VXLAN header, and read the VNI from the VXLAN header.

It should be noted that, because the address of the second network device needs to be encapsulated in the second packet, before the second network device receives the second packet sent by the first network device, the second network device needs to advertise the address of the second network device to the first network device. The address of the second network device indicates the second network device to forward the packet based on the VNI carried in the destination address field when receiving the second packet. When advertising the address of the second network device to the first network device, the second network device locally establishes a forwarding entry, and the forwarding entry may include a match item and an action item. The match item includes the address of the second network device. The action item indicates that after matching succeeds by using the match item, the VNI is obtained from the destination address field, the second packet is decapsulated, and the decapsulated packet is forwarded based on the VNI.

When the VNI is carried in the DOH of the IPv6 extension header, after receiving the second packet sent by the first network device, the second network device determines whether the destination address field includes the address of the second network device. If the destination address field includes the address of the second network device, it is determined whether the type field of the TLV in the DOH indicates that the VNI is carried. If the type field of the TLV indicates that the VNI is carried, the VNI is obtained from the DOH. When the VNI is directly carried in the DOH, the second network device may obtain the VNI by parsing the DOH. When the VNI is carried in the VXLAN header and the VXLAN header is carried in the DOH, the second network device needs to first parse the DOH to obtain the VXLAN header, and read the VNI from the VXLAN header.

When the VNI is carried in the SID corresponding to the second network device in the SID list of the SRH in the IPv6 extension header, after receiving the second packet, the second network device determines whether the destination address field of the second packet includes the SID of the second network device. If the destination address field of the second packet includes the SID of the second network device, the second network device obtains the VNI from the SID of the second network device carried in the second packet.

When the VNI is carried in another corresponding SID (a SID of a network device other than the second network device) in the SID list of the SRH in the IPv6 extension header, after receiving the second packet, the second network device determines whether the destination address field of the second packet includes the SID of the second network device. If the destination address field of the second packet includes the SID of the second network device, the second network device obtains the VNI from the another SID carried in the second packet. For example, a field or a new field in the SRH may be used to indicate the second network device to obtain the VNI from a specified SID, or it is predefined that the VNI is carried in a next SID adjacent to the SID of the second network device. In this case, after receiving the second packet, the second network device reads the next SID from the SID list, and obtains the VNI from the next SID.

It should be noted that, because the SID of the second network device needs to be encapsulated in the second packet, before the second network device receives the second packet sent by the first network device, the second network device needs to advertise the SID of the second network device to the first network device. In addition, a type of the SID of the second network device may be further advertised. The type corresponding to the SID of the second network device may be defined as an END.VN type, and indicates the second network device to obtain, after receiving the corresponding packet, the VNI from the packet, decapsulate the packet, search the forwarding table based on the VNI, and forward the decapsulated packet based on the forwarding table. The SID of the second network device may be the address of the second network device, or a corresponding address obtained after the address of the second network device is compressed.

When advertising the SID of the second network device to the first network device, the second network device may further locally establish the forwarding entry. The forwarding entry includes the match item and the action item. The match item includes the SID of the second network device, and the action item indicates an action that needs to be performed when matching succeeds. For example, the action item indicates to decapsulate the second packet when the matching succeeds, and forward the decapsulated packet based on the VNI.

S706: The second network device decapsulates the second packet to obtain the first packet.

In this embodiment, after obtaining the VNI, when determining, based on information in the encapsulated IPv6 header, that the second network device is an end node, the second network device decapsulates the second packet, removes the encapsulated IPv6 header, and obtains the first packet. For example, when the second network device determines that the destination address field in the IPv6 header of the second packet includes the SID of the second network device, the second network device decapsulates the second packet based on the action item in the forwarding entry to obtain the first packet. The decapsulating the packet includes: removing the IPv6 basic header encapsulated in the second packet to obtain the first packet, or removing the IPv6 basic header and the IPv6 extension header encapsulated in the second packet to obtain the first packet.

An execution sequence of S705 and S706 is not limited in this embodiment. S706 may be performed before S705, S705 may be performed before S706, or S705 and S706 may be performed simultaneously.

S707: The second network device forwards the first packet based on the VNI.

After obtaining the first packet, the second network device determines a forwarding path based on the VNI, and forwards the first packet based on the forwarding path. Specifically, the second network device obtains the corresponding VXLAN instance forwarding table based on the VNI, searches the VXLAN instance forwarding table for the forwarding entry based on the destination address in the first packet, and forwards the first packet based on the forwarding entry. It should be noted that, when the first packet is a layer 2 packet, the corresponding destination address is a MAC address, and the obtained forwarding table is a MAC table. When the first packet is a layer 3 packet, the corresponding destination address is an IP address, and the obtained forwarding table is a routing table.

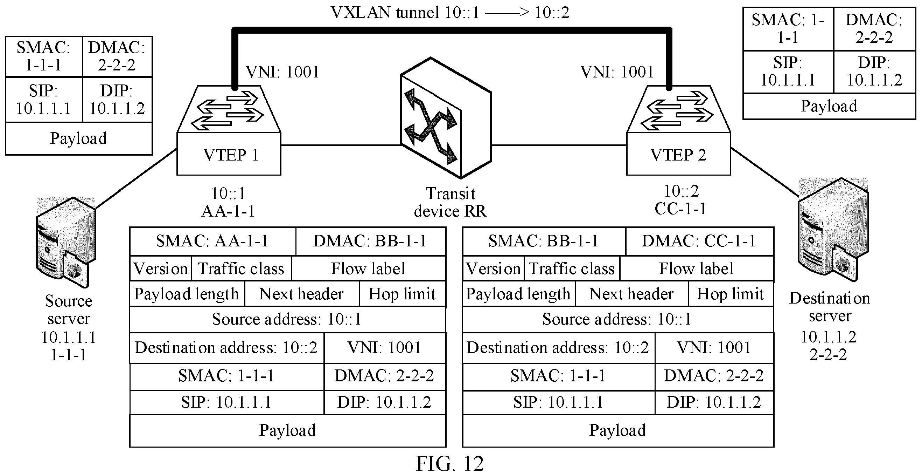

For ease of understanding, refer to a schematic diagram of an application scenario shown in FIG. 12. An example in which the application scenario includes a source server, a destination server, a VTEP 1, a VTEP 2, and a transit device RR is used for description. An IPv4 address of the source server is 10.1.1.1, and a MAC address is 1-1-1. An IPv4 address of the destination server is 10.1.1.2, and a MAC address is 2-2-2. An IPv6 address of the VTEP 1 is 10:: 1, and a MAC address is AA-1-1. An IP address of the VTEP 2 is 10::2, and a MAC address is CC-1-1. A MAC address of the transit device RR is BB-1-1. A VXLAN tunnel is established between the VTEP 1 and the VTEP 2. VNIs corresponding to the VTEP 1 and the VTEP 2 are 1001. In FIG. 6, forwarding of a layer 2 service packet is used as an example for description. Specifically, after receiving a packet 1 sent by the source server, the VTEP 1 determines, based on information about a port connected between the VTEP 1 and the source server, a tenant identifier VNI 1001 corresponding to the source server, and encapsulates the VNI in a destination address field of an IPv6 basic header. The destination address field further includes an address 10::2 of the tunnel endpoint VTEP 2. A source address field includes an address 10:: 1 of the tunnel endpoint VTEP 1. In addition, an outer MAC header is encapsulated. The MAC header includes a source MAC address AA-1-1 and a destination MAC address BB-1-1. The VTEP1 obtains a packet 2 after the encapsulation, and sends the packet 2 to the transit device RR. After receiving the packet 2, the transit device RR determines a MAC address of a next-hop network device based on a layer 2 forwarding table, updates the source MAC and the destination MAC in the outer MAC header: updates the source MAC to BB-1-1 and the destination MAC to CC-1-1, to obtain a packet 3, and forwards the packet 3 to the VTEP 2. The VTEP 2 finds, based on the destination address 10::2, that the VTEP 2 is the tunnel endpoint. In this case, the VTEP 2 obtains the VNI: 1001 from the destination address field in the IPv6 basic header of the packet 3, searches the corresponding forwarding table based on the VNI, decapsulates the IPv6 basic header in the packet 3 to obtain a packet 4, and forwards the packet 4 to the destination server based on the forwarding table.

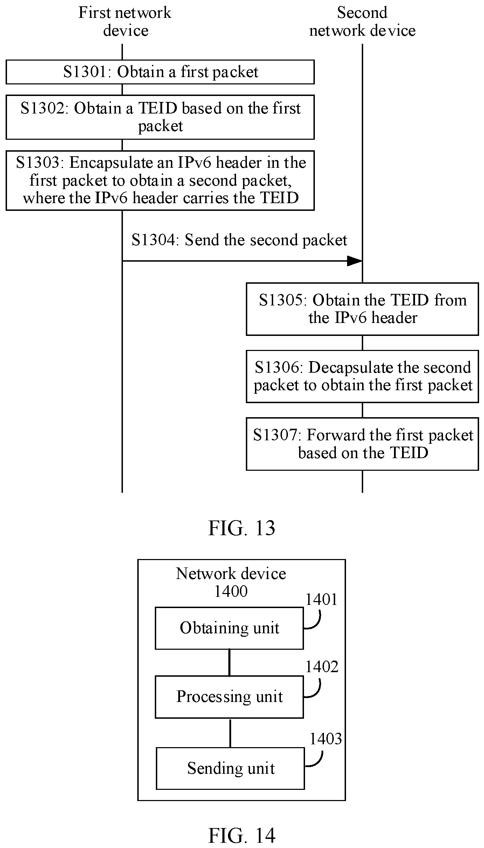

FIG. 13 is a flowchart of a GTP packet transmission method according to an embodiment of this application. As shown in FIG. 13, the method includes the following steps.

S1301: A first network device obtains a first packet.

S1302: The first network device obtains a TEID based on the first packet.

In this embodiment, the first network device may be the switch 1 in FIG. 1a. The first network device may receive the first packet sent by a host or the source server in FIG. 1a, or the first network device generates the first packet. After the first packet is obtained, the TEID corresponding to the first packet is obtained based on the first packet. The TEID is a tenant identifier corresponding to a device that sends the first packet. Specifically, after receiving the first packet, the first network device may obtain, based on an interface for receiving the first packet, the TEID corresponding to the first packet. The TEID corresponds to the interface for receiving the first packet. For example, the TEID may be configured on the interface of the first network device in advance. After receiving the first packet through the interface, the first network device obtains the TEID based on the correspondence between the interface and the TEID. Alternatively, after receiving the first packet, the first network device may obtain, based on an address (a source address) in the first packet, the TEID corresponding to the first packet. For example, the correspondence between the address and the TEID is configured on the first network device in advance. After receiving the first packet, the first network device determines, based on the address of the first packet and the correspondence, the TEID corresponding to the address.

S1303: The first network device encapsulates an IPv6 header in the first packet to obtain a second packet.

After determining the TEID corresponding to the first packet, the first network device encapsulates the IPv6 header in the first packet, where the TEID is carried in the IPv6 header, to obtain the second packet. There are two manners in which the IPv6 header carries the TEID. In one manner, the IPv6 header directly carries the TEID. In the other manner, the IPv6 header includes a GTP header, and the GTP header includes the TEID.

Optionally, the IPv6 header is an IPv6 basic header or an IPv6 extension header, and the TEID may be carried in the IPv6 basic header or the IPv6 extension header. Alternatively, the GTP header may be carried in the IPv6 basic header or the IPv6 extension header. The IPv6 basic header includes basic packet forwarding information, and a length is 40 bytes.

### (1) The IPv6 header is the IPv6 basic header.

When the IPv6 header is the IPv6 basic header, the TEID may be carried in a destination address field of the IPv6 basic header. Usually, a length of the destination address field in the IPv6 basic header is 128 bits, and the field is used to carry an address of a destination network device. Optionally, in a packet forwarding process, prefix information of the destination network device usually does not need to occupy the entire destination address field. For example, the prefix information of the destination network device needs to occupy only 64 bits of the destination address field. Optionally, the address of the destination network device may be compressed to 64 bits, and occupies the 1^{st} bit to the 64^{th} bit. In this way, the TEID may occupy the 65^{th} bit to the 128^{th} bit in the destination address field. Alternatively, the TEID may occupy the 80^{th} bit to the 128^{th} bit in the destination address field. A location occupied by the TEID in the destination address field may be determined based on an actual application situation. This is not limited in this embodiment.

Optionally, the destination address field may include a destination address and the TEID. For a specific carrying manner, refer to FIG. 8a.

In addition, the IPv6 header may further include a TEID flag (flag), and the TEID flag indicates that the second packet carries the TEID. A length of the flag is 1 bit. When the bit is 1, it indicates that the second packet carries the TEID. The TEID flag may be carried in the destination address field. For a specific carrying manner, refer to FIG. 8b. The destination address field includes the destination address, the TEID flag, and the TEID.

For the TEID carried in the destination address field of the IPv6 basic header, there is another carrying manner. To be specific, the destination address field includes the GTP header, and the GTP header carries the TEID. That is, the GTP header is encapsulated in the destination address field of the IPv6 basic header. A length of the GTP header is 64 bits. The destination address usually occupies the 1^{st} bit to the 64^{th} bit in the destination address field. In this case, the GTP header may be located in the 65^{th} bit to the 128^{th} bit of the destination address field. The GTP header includes the TEID flag (flag). To be specific, the destination address field in the IPv6 basic header includes the destination address and the GTP header, and the GTP header includes the TEID and the TEID flag.

The destination address field is usually used to carry the destination address of the packet. After receiving the packet, the destination network device indicated by the destination address reads the destination address from the destination address field, and forwards the packet based on the destination address. In this embodiment, the destination address field includes not only the destination address, but also the TEID. The TEID indicates the destination network device to forward the packet. To enable the destination network device to forward the packet based on the TEID after receiving the packet, the device (the second network device) indicated by the destination address in the destination address field needs to be notified in advance to forward the second packet based on the TEID carried in the destination address field after receiving the packet.

### (2) The IPv6 header is the IPv6 extension header.

Optionally, when encapsulating the IPv6 header in the first packet, the first network device may encapsulate the IPv6 basic header and the IPv6 extension header in the first packet.

When the IPv6 header is the IPv6 extension header, the IPv6 extension header may be used to carry the TEID. The IPv6 extension header may include an HBH, a DOH, an RH, an SRH, or the like. A format of the DOH is shown in FIG. 3a.

In an implementation, the TEID is carried in the DOH of the IPv6 extension header. When the DOH is used to carry the TEID, an options field in the DOH may be used to directly carry the TEID. For a specific carrying manner, refer to FIG. 9a. Alternatively, the options field in the DOH may be used to carry the GTP header, and the GTP header carries the TEID. For a carrying manner, refer to FIG. 9b. When the IPv6 extension header further includes the TEID flag (flag), the options field in the DOH may be used to directly carry the flag (flag). For a carrying manner, refer to FIG. 9c. Alternatively, the options field in the DOH may be used to carry the GTP header, and the GTP header carries the TEID flag and the TEID. Specifically, the GTP header may be completely copied to the options field.

Optionally, "Options" in the DOH includes a type-length-value TLV, and a type field in the TLV indicates that the DOH carries the TEID. For example, it may be specified that when the type field T is 1, it indicates that the DOH carries the TEID. After receiving the second packet, another network device may determine, based on T=1, that the second packet includes the TEID.

Optionally, "Options" in the DOH includes a TLV, and a type of the TLV indicates that the DOH carries the GTP header. The TLV may be an enhanced GTP TLV For a structure of the enhanced GTP TLV, refer to FIG. 4a.

Optionally, the TEID may be carried in an options data field. For a carrying manner, refer to FIG. 10a.

Optionally, the GTP header may be carried in an options data field. For a carrying manner, refer to FIG. 10b.

In another implementation, when the TEID is carried in the SRH, the TEID may be carried in a SID list of the SRH. A format of the SRH is shown in FIG. 5a, and a format of a SID is shown in FIG. 5b.

A case in which the TEID is carried in the SID list may include the following cases.

### Case 1:

The TEID is carried in a SID corresponding to the second network device in the SID list. To be specific, the TEID is carried in a function (function) field of the SID of the second network device. When the SID of the second network device is used to carry the TEID, the SID of the second network device may be used to directly carry the TEID. For a carrying manner, refer to FIG. 11a. The SID list includes a SID 1 to a SID n, and the SID of the second network device is the SID n. The SID n includes a locator and the TEID. The locator is an address of the second network device. For example, the TEID occupies the 64^{th} bit to the 128^{th} bit in the SID of the second network device, or occupies the 80^{th} bit to the 128^{th} bit in the SID of the second network device. When the SID n further includes a parameter (argument), the SID n includes the locator, the TEID, and the argument. In this case, the TEID occupies the 64^{th} bit to the 87^{th} bit in the SID of the second network device.

Alternatively, the SID of the second network device is used to carry the GTP header, and the GTP header includes the TEID. For a carrying manner, refer to FIG. 11b. The SID of the second network device is the SID n, and the SID n includes the locator and the GTP header. Specifically, the GTP header may occupy the 64^{th} bit to the 128^{th} bit in the SID of the second network device. The SID of the second network device indicates the second network device to forward the packet based on the TEID carried in the SID.

### Case 2:

The TEID is carried in a segment list in which a SID of a network device other than the second network device is located. For example, if the SID of the second network device in the SID list is a SID 3, the TEID is carried in a SID 4 in the SID list. That is, the TEID is carried in another SID. In this case, the another SID may be used to directly carry the TEID. For a carrying manner, refer to FIG. 11a. Alternatively, the another SID may be used to carry the GTP header, and the GTP header includes the TEID. For a carrying manner, refer to FIG. 11b. The SID of the second network device indicates the second network device to read the TEID from the another SID, and forward the packet based on the TEID.

In this embodiment, because the second network device needs to forward the packet based on the TEID, when advertising the SID of the second network device, the second network device may notify that a type of the SID of the second network device is an END.VN type. The SID is an SRv6 SID. A locator part of the SID includes an address of a destination tunnel endpoint corresponding to the GTP packet, and a function part of the SID includes the TEID or the GTP header. Forwarding actions corresponding to a behavior of the SID include: After receiving the packet, the destination tunnel endpoint obtains a corresponding instance forwarding table based on the TEID carried in the SID of the packet, decapsulates the packet, searches the forwarding table based on a MAC address and the like in a payload, and forwards the packet. Optionally, a SID corresponding to an address of the second network device is a SID of END.VN type. Optionally, the SID corresponding to the address of the second network device is an SRv6 locator of the second network device.

During specific implementation, after establishing an IGP session or a BGP session with the first network device, the second network device may advertise the SID of the second network device and a type corresponding to the SID to the first network device by using the IGP or the BGP. The first network device stores the SID of the second network device and the type corresponding to the SID. When needing to forward the GTP packet to the second network device, the first network device may encapsulate the TEID corresponding to the packet in the IPv6 header based on the type of the SID of the second network device. When advertising the SID, the second network device locally establishes a forwarding table, and the forwarding table includes a match item and an action item. The match item includes the SID of the second network device. The action item indicates the second network device to decapsulate the packet and forward the packet based on the TEID carried in the packet.

When the IPv6 header further includes the TEID flag, the TEID flag may be carried in the SID of the second network device, for example, the TEID flag and the TEID are encapsulated in the SID n. When the SID n further includes a parameter (argument), the SID n includes the locator, the TEID flag, the TEID, and the argument.

It may be learned from the foregoing descriptions that the IPv6 basic header may be used to carry the TEID, or the IPv6 extension header may be used to carry the TEID. In either manner, no additional UDP header needs to be encapsulated. This reduces an amount of data for packet encapsulation, and improves packet encapsulation efficiency.

In addition, a flow label in the IPv6 header may correspond to a destination port number of the GTP packet. The destination port number may be used to not only perform load balance processing in a forwarding process of the second packet, but also determine that the second packet includes the GTP packet. The port number may be a preset fixed port number, or may be a port number obtained through dynamic calculation based on a payload of the first packet. Optionally, a method for calculating the flow label of the second packet is the same as that for calculating a UDP source port used for load balance in the GTP packet, and a port number value obtained from the GTP packet may be carried in the flow label of the second packet.

To implement an in-situ flow information telemetry IFIT function, when the IPv6 header is encapsulated in the first packet, IFIT instructions may be carried in the IPv6 header, to implement hop-by-hop network in-situ flow information telemetry, or network in-situ flow information telemetry of a specified node or a destination node. Specifically, the IFIT instructions may be carried in the IPv6 extension header.

S1304: The first network device sends the second packet to the second network device.

In this embodiment, after obtaining the second packet by encapsulating the IPv6 header in the first packet, the first network device sends the second packet to the second network device. The second network device may be an end node in a VXLAN network. For example, the second network device is the switch 2 in FIG. 1a. The destination address field in the IPv6 header of the second packet is the address of the second network device or the SRv6 locator of the second network device. For example, in FIG. 1a, the destination address field in the IPv6 header of the second packet includes an address of the switch 2 or an SRv6 locator of the switch 2.

S1305: The second network device receives the second packet, and obtains the TEID from the IPv6 header of the second packet.

It may be learned from the foregoing descriptions that the TEID may be carried in the IPv6 basic header or the IPv6 extension header. When the TEID is carried in different IPv6 headers, the second network device obtains the TEID from the IPv6 header in different manners. For an implementation in which the second network device obtains the TEID from the IPv6 header, refer to the related description in S705.

It should be noted that, because the SID of the second network device needs to be encapsulated in the second packet, before the second network device receives the second packet sent by the first network device, the second network device needs to advertise the SID of the second network device to the first network device. In addition, a type of the SID of the second network device may be further advertised. The type corresponding to the SID of the second network device may be defined as an END.VN type, and indicates the second network device to obtain, after receiving the corresponding packet, the TEID from the packet, decapsulate the packet, search the forwarding table based on the TEID, and forward the decapsulated packet based on the forwarding table. The SID of the second network device may be the address of the second network device, or a corresponding address obtained after the address of the second network device is compressed.

When advertising the SID of the second network device to the first network device, the second network device may further locally establish the forwarding entry. The forwarding entry includes the match item and the action item. The match item includes the SID of the second network device, and the action item indicates an action that needs to be performed when matching succeeds. For example, the action item indicates to decapsulate the second packet when the matching succeeds, and forward the decapsulated packet based on the TEID.

S1306: The second network device decapsulates the second packet to obtain the first packet.

In this embodiment, after obtaining the TEID, when determining, based on information in the encapsulated IPv6 header, that the second network device is an end node, the second network device decapsulates the second packet, removes the encapsulated IPv6 header, and obtains the first packet. For example, when the second network device determines that the destination address field in the IPv6 header of the second packet includes the SID of the second network device, the second network device decapsulates the second packet based on the action item in the forwarding entry to obtain the first packet. The decapsulating the packet includes: removing the IPv6 basic header encapsulated in the second packet to obtain the first packet, or removing the IPv6 basic header and the IPv6 extension header encapsulated in the second packet to obtain the first packet.

An execution sequence of S1305 and S1306 is not limited in this embodiment. S1306 may be performed before S1305, S1305 may be performed before S1306, or S1305 and S1306 may be performed simultaneously.

S1307: The second network device forwards the first packet based on the TEID.

After obtaining the first packet, the second network device determines a forwarding path based on the TEID, and forwards the first packet based on the forwarding path.

Based on the foregoing method embodiments, an embodiment of this application further provides a network device for packet transmission. This is described below with reference to the accompanying drawings.

FIG. 14 is a schematic diagram of a possible structure of the network device in the foregoing method embodiments. The network device 1400 may implement functions of the first network device in the embodiment shown in FIG. 2, FIG. 7, or FIG. 13. Alternatively, the network device 1400 may implement functions of the switch 1 in the embodiment shown in FIG. 1a and the VTEP 1 in the embodiment shown in FIG. 12. Refer to FIG. 14. The network device 1400 includes an obtaining unit 1401, a processing unit 1402, and a sending unit 1403. These units may perform corresponding functions of the first network device in the foregoing method examples.

The obtaining unit 1401 is configured to support the network device 1400 in performing S201 in FIG. 2, S701 in FIG. 7, or S1301 in FIG. 13. The processing unit 1402 is configured to support the network device 700 in performing S202 and S203 in FIG. 2, S702 and S703 in FIG. 7, or S1302 and S1303 in FIG. 13. The sending unit 703 is configured to support the network device 1400 in performing S204 in FIG. 2, S704 in FIG. 7, or S1304 in FIG. 13, and/or performing another process performed by the first network device in the technology described in this specification. For example, the obtaining unit 1401 is configured to perform an operation of obtaining a first packet by the first network device in the foregoing method embodiment. The processing unit 1402 is configured to perform various processing operations performed by the first network device in the foregoing method embodiment. The sending unit 1403 is configured to perform an operation of sending a packet by the first network device in the foregoing method embodiment. For example, the processing unit 1402 is configured to: obtain a tunnel header based on the first packet, and encapsulate an IPv6 header in the first packet to obtain a second packet. The sending unit 1403 is configured to send the second packet to a second network device. For a specific execution process, refer to detailed descriptions of corresponding steps in the embodiment shown in FIG. 2, FIG. 7, or FIG. 13. Details are not described herein again.

Optionally, the processing unit 1402 is specifically configured to obtain the tunnel header based on an interface for receiving the first packet. The tunnel header corresponds to the interface for receiving the first packet.

It should be noted that, in this embodiment of this application, unit division is an example, and is merely logical function division. During actual implementation, another division manner may be used. Functional units in this embodiment of this application may be integrated into one processing unit, or each of the units may exist alone physically, or two or more units are integrated into one unit. For example, in the foregoing embodiment, the processing unit and the sending unit may be a same unit, or may be different units. The integrated unit may be implemented in a form of hardware, or may be implemented in a form of a software functional unit.

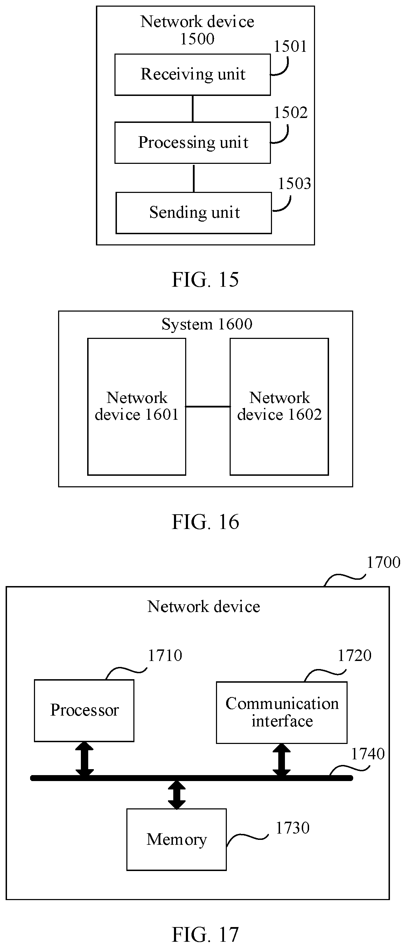

FIG. 15 is a schematic diagram of a possible structure of the network device in the foregoing method embodiments. The network device 1500 may implement functions of the second network device in the embodiment shown in FIG. 2, FIG. 7, or FIG. 13. Alternatively, the network device 1500 may implement functions of the switch 2 in the embodiment shown in FIG. 1a and the VTEP 2 in the embodiment shown in FIG. 12. Refer to FIG. 15. The network device 1500 includes a receiving unit 1501, a processing unit 1502, and a sending unit 1503. These units may perform corresponding functions of the second network device in the foregoing method examples. The receiving unit 1501 is configured to support the network device 1500 in performing S205 in FIG. 2, S705 in FIG. 7, or S1305 in FIG. 13. The processing unit 1502 is configured to support the network device 1500 in performing S205 and S206 in FIG. 2, S705 and S706 in FIG. 7, or S1305 and S1306 in FIG. 13. The sending unit 1503 is configured to support the network device 1500 in performing S207 in FIG. 2, S707 in FIG. 7, or S1307 in FIG. 13, and/or performing another process performed by the second network device in the technology described in this specification. For example, the receiving unit 1501 is configured to perform an operation of receiving a second packet by the second network device in the foregoing method embodiment. The processing unit 1502 is configured to perform various processing operations performed by the second network device in the foregoing method embodiment. The sending unit 1503 is configured to perform an operation of forwarding the first packet by the second network device in the foregoing method embodiment. For example, the processing unit 1502 is configured to: obtain a tunnel header from an IPv6 header of the second packet, and decapsulate the second packet to obtain a first packet. The sending unit 1503 is configured to forward the first packet. For a specific execution process, refer to detailed descriptions of corresponding steps in the embodiment shown in FIG. 2, FIG. 7, or FIG. 13. Details are not described herein again.

Optionally, the processing unit 1502 is specifically configured to: determine that a destination address field includes an address of the second network device, and obtain the tunnel header from the destination address field in response to determining that the destination address field includes the address of the second network device.

Optionally, the processing unit 1502 is specifically configured to: determine that the destination address field of the second packet includes a SID of the second network device, and obtain the tunnel header from the SID of the second network device in response to determining that the destination address field of the second packet includes the SID of the second network device.

Optionally, the sending unit 1503 is further configured to: before the receiving unit 1501 receives the second packet from the first network device, advertise the SID of the second network device to the first network device.

Optionally, the processing unit 1502 is further configured to: establish a forwarding entry, where the forwarding entry includes a match item and an action item, and the match item includes the SID of the second network device; decapsulate the second packet based on the action item; and forward the first packet based on the tunnel header.

It should be noted that, in this embodiment of this application, unit division is an example, and is merely logical function division. During actual implementation, another division manner may be used. Functional units in this embodiment of this application may be integrated into one processing unit, or each of the units may exist alone physically, or two or more units are integrated into one unit. For example, in the foregoing embodiment, the processing unit and the sending unit may be a same unit, or may be different units. The integrated unit may be implemented in a form of hardware, or may be implemented in a form of a software functional unit.

Refer to FIG. 16. An embodiment of this application provides a network system 1600 for packet transmission. The system 1600 is configured to implement the packet transmission method in the foregoing method embodiment. The system 1600 includes a network device 1601 and a network device 1602. The network device 1601 may implement functions of the first network device in the embodiment shown in FIG. 2, FIG. 7, or FIG. 13, or functions of the network device 1400 in FIG. 14. The network device 1602 may implement functions of the second network device in the embodiment shown in FIG. 2, FIG. 7, or FIG. 13, or functions of the network device 1500 in FIG. 15. The network device 1601 may further implement functions of the switch 1 in the embodiment shown in FIG. 1a or functions of the VTEP 1 in the embodiment shown in FIG. 12. The network device 1602 may further implement functions of the switch 2 in the embodiment shown in FIG. 1a or functions of the VTEP 2 in the embodiment shown in FIG. 12. For a specific execution process, refer to detailed descriptions of corresponding steps in the embodiment shown in FIG. 2, FIG. 7, or FIG. 13. Details are not described herein again.

FIG. 17 is a schematic diagram of a structure of a network device according to an embodiment of this application. The network device may be, for example, the first network device or the second network device in the foregoing method embodiment. Alternatively, the network device 1400 in FIG. 14 and the network device 1500 in FIG. 15 may be implemented by using the device shown in FIG. 17.

Refer to FIG. 17. The network device 1700 includes a processor 1710, a communication interface 1720, and a memory 1730. There may be one or more processors 1710 in the network device 1700. One processor is used as an example in FIG. 17. In this embodiment of this application, the processor 1710, the communication interface 1720, and the memory 1730 may be connected by using a bus system or in another manner. In FIG. 17, for example, a bus system 1740 is used for connection.

The processor 1710 may be a CPU, an NP, or a combination of the CPU and the NP. The processor 1710 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

When the network device is a first network device, the processor 1710 may perform related functions in the foregoing method embodiment, for example, receiving a first packet, obtaining a tunnel header corresponding to the first packet, and encapsulating an IPv6 header in the first packet to obtain a second packet.

The communication interface 1720 is configured to receive and send the packet. Specifically, the communication interface 1720 may include a receiving interface and a sending interface. The receiving interface may be configured to receive the packet, and the sending interface may be configured to send the packet. There may be one or more communication interfaces 1720.

The memory 1730 may include a volatile memory (volatile memory), for example, a random access memory (random access memory, RAM). The memory 1730 may further include a non-volatile memory (non-volatile memory), for example, a flash memory (flash memory), a hard disk drive (hard disk drive, HDD), or a solid-state drive (solid-state drive, SSD). The memory 1730 may further include a combination of the foregoing types of memories. The memory 1730 may store, for example, user-associated information described above.

Optionally, the memory 1730 stores an operating system, a program, an executable module, or a data structure, a subset thereof, or an extended set thereof. The program may include various operation instructions for implementing various operations. The operating system may include various system programs, and is configured to implement various basic services and process a hardware-based task. The processor 1710 may read the program in the memory 1730, to implement the method provided in embodiments of this application.

The memory 1730 may be a storage device in the network device 1700, or may be a storage apparatus independent of the network device 1700.

The bus system 1740 may be a peripheral component interconnect (peripheral component interconnect, PCI) bus, an extended industry standard architecture (extended industry standard architecture, EISA) bus, or the like. The bus system 1740 may be classified into an address bus, a data bus, a control bus, and the like. For ease of representation, only one bold line is used to represent the bus in FIG. 17, but this does not mean that there is only one bus or only one type of bus.

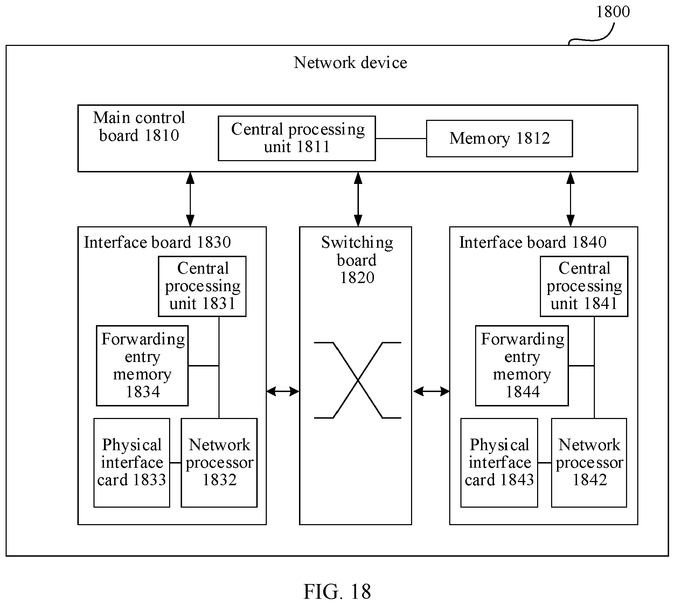

FIG. 18 is a schematic diagram of a structure of another network device 1800 according to an embodiment of this application. The network device 1800 may be configured as the first network device or the second network device in the foregoing method embodiments. Alternatively, the network device 1400 in FIG. 14 and the network device 1500 in FIG. 15 may be implemented by using the device shown in FIG. 18.

The network device 1800 includes a main control board 1810 and an interface board 1830.

The main control board 1810 is also referred to as a main processing unit (main processing unit, MPU) or a route processor card (route processor card). The main control board 1810 controls and manages components in the network device 1800, including functions of routing calculation, device management, device maintenance, and protocol processing. The main control board 1810 includes a central processing unit 1818 and a memory 1812.

The interface board 1830 is also referred to as a line processing unit (line processing unit, LPU), a line card (line card), or a service board. The interface board 1830 is configured to: provide various service interfaces, and forward a data packet. The service interface includes but is not limited to an Ethernet interface, a POS (Packet over SONET/SDH) interface, and the like. The Ethernet interface is, for example, a flexible Ethernet client interface (flexible Ethernet clients, FlexE Clients). The interface board 1830 includes a central processing unit 1831, a network processor 1832, a forwarding entry memory 1834, and a physical interface card (physical interface card, PIC) 1833.

The central processing unit 1831 on the interface board 1830 is configured to: control and manage the interface board 1830, and communicate with the central processing unit 1811 on the main control board 1810.

The network processor 1832 is configured to implement packet forwarding processing. A form of the network processor 1832 may be a forwarding chip. Specifically, processing of an uplink packet includes: processing of an inbound interface of the packet, and searching a forwarding table. Processing of a downlink packet includes searching the forwarding table and the like.

The physical interface card 1833 is configured to implement a physical layer interconnection function. Original traffic enters the interface board 1830 through the physical interface card 1833, and a processed packet is sent out through the physical interface card 1833. The physical interface card 1833 includes at least one physical interface, and the physical interface is also referred to as a physical port. The physical interface card 1833 is also referred to as a subcard, may be mounted on the interface board 1830, and is responsible for converting an optical/electrical signal into a packet, performing validity check on the packet, and forwarding the packet to the network processor 1832 for processing. In some embodiments, the central processing unit 1831 of the interface board 1803 may also execute a function of the network processor 1832, for example, implementing software forwarding based on a general-purpose CPU. Therefore, the network processor 1832 is not required in the physical interface card 1833.

Optionally, the network device 1800 includes a plurality of interface boards. For example, the network device 1800 further includes an interface board 1840. The interface board 1840 includes a central processing unit 1841, a network processor 1842, a forwarding entry memory 1844, and a physical interface card 1843.

Optionally, the network device 1800 further includes a switching board 1820. The switching board 1820 may also be referred to as a switch fabric unit (switch fabric unit, SFU). When the network device has a plurality of interface boards 1830, the switching board 1820 is configured to complete data exchange between the interface boards. For example, the interface board 1830 may communicate with the interface board 1840 via the switching board 1820.

The main control board 1810 is coupled to the interface board 1830. For example, the main control board 1810, the interface board 1830, the interface board 1840, and the switching board 1820 are connected to a system backplane through a system bus, to implement communication. In a possible implementation, an inter-process communication (inter-process communication, IPC) channel is established between the main control board 1810 and the interface board 1830, and the main control board 1810 communicates with the interface board 1830 through the IPC channel.

Logically, the network device 1800 includes a control plane and a forwarding plane. The control plane includes the main control board 1810 and the central processing unit 1831. The forwarding plane includes components that perform forwarding, for example, the forwarding entry memory 1834, the physical interface card 1833, and the network processor 1832. The control plane performs functions such as a function of a router, generating a forwarding table, processing signaling and a protocol packet, and configuring and maintaining a status of a device. The control plane delivers the generated forwarding table to the forwarding plane. On the forwarding plane, the network processor 1832 searches the forwarding table delivered by the control plane to forward a packet received by the physical interface card 1833. The forwarding table delivered by the control plane may be stored in the forwarding entry memory 1834. In some embodiments, the control plane and the forwarding plane may be completely separated, and are not on a same device.

It should be understood that the processing unit 1402 in the network device 1400 may be equivalent to the central processing unit 1811 or the central processing unit 1831 in the network device 1800.

It should be understood that an operation performed on the interface board 1840 is consistent with an operation performed on the interface board 1830 in this embodiment of this application. For brevity, details are not described. It should be understood that the network device 1800 in this embodiment may correspond to the first network device or the second network device in the foregoing method embodiments. The main control board 1810, the interface board 1830, and/or the interface board 1840 in the network device 1800 may implement functions and/or various steps implemented by the first network device or the second network device in the foregoing method embodiments. For brevity, details are not described herein again.

It should be understood that there may be one or more main control boards. When there are a plurality of main control boards, the main control boards may include an active main control board and a standby main control board. There may be one or more interface boards, and a network device having a stronger data processing capability provides more interface boards. There may also be one or more physical interface cards on the interface board. There may be no switching board or there may be one or more switching boards. When there are a plurality of switching boards, load sharing and redundancy backup may be implemented together. In a centralized forwarding architecture, the network device may not require the switching board, and the interface board provides a function of processing service data of an entire system. In a distributed forwarding architecture, the network device may have at least one switching board, and data exchange between the plurality of interface boards is implemented by using the switching board, to provide large-capacity data exchange and processing capability. Therefore, data access and processing capability of a network device in a distributed architecture is better than that of a device in a centralized architecture. Optionally, the network device may alternatively include only one card. That is, there is no switching board. Functions of the interface board and the main control board are integrated on the card. In this case, a central processing unit on the interface board and a central processing unit on the main control board may be combined into one central processing unit on the card, to perform functions obtained after the two central processing units are combined. A device in this form (for example, a network device such as a low-end switch or router) has a weak data exchange and processing capability. A specific architecture to be used depends on a specific networking deployment scenario.

In some possible embodiments, the first network device or the second network device may be implemented as a virtualization device. For example, the virtualization device may be a virtual machine (virtual machine, VM) on which a program having a packet sending function is run, and the virtual machine is deployed on a hardware device (for example, a physical server). The virtual machine is a complete computer system simulated by software, having complete hardware system functions, and running in a completely isolated environment. The virtual machine may be configured as the first network device or the second network device. For example, the first network device or the second network device may be implemented based on a general-purpose physical server in combination with a network function virtualization (network function virtualization, NFV) technology. The first network device or the second network device is a virtual host, a virtual router, or a virtual switch. Persons skilled in the art may virtualize, by reading this application, the first network device or the second network device having the foregoing function on the general-purpose physical server in combination with the NFV technology. Details are not described herein again.

It should be understood that the network devices in the foregoing product forms separately have any function implemented by the first network device or the second network device in the foregoing method embodiments. Details are not described herein.

An embodiment of this application further provides a chip, including a processor and an interface circuit. The interface circuit is configured to receive instructions and transmit the instructions to the processor. The processor may be configured to perform the foregoing packet transmission method. The processor is coupled to a memory. The memory is configured to store a program or instructions. When the program or the instructions are executed by the processor, the chip system is enabled to implement the method in any one of the foregoing method embodiments.

Optionally, the chip system may include one or more processors. The processor may be implemented by using hardware, or may be implemented by using software. When being implemented by using the hardware, the processor may be a logic circuit, an integrated circuit, or the like. When being implemented by using the software, the processor may be a general-purpose processor, and is implemented by reading software code stored in the memory.

Optionally, the chip system may also include one or more memories. The memory may be integrated with the processor, or may be disposed separately from the processor. This is not limited in this application. For example, the memory may be a non-transitory memory, for example, a read-only memory ROM. The memory and the processor may be integrated on a same chip, or may be separately disposed on different chips. A type of the memory and a manner of disposing the memory and the processor are not limited in this embodiment of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable logic device (programmable logic device, PLD), or another integrated chip.

An embodiment of this application further provides a computer-readable storage medium, including instructions and a computer program. When the computer-readable storage medium is run on a computer, the computer is enabled to perform the packet transmission method in the foregoing embodiments.

An embodiment of this application further provides a computer program product including instructions or a computer program. When the computer program product runs on a computer, the computer is enabled to perform the packet transmission method in the foregoing embodiments.

In the specification, claims, and accompanying drawings of this application, the terms "first", "second", "third", "fourth", and the like (if existent) are intended to distinguish between similar objects but do not necessarily indicate a specific order or sequence. It should be understood that the data used in such a way are interchangeable in proper circumstances, so that the embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, the unit division is merely logical service division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, service units in embodiments of this application may be integrated into one processing unit, or each of the units may exist alone physically, or two or more units are integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to an existing technology, or all or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons of skill in the art should be aware that in one or more of the foregoing examples, the services described in this application may be implemented by using hardware, software, firmware, or any combination thereof. When being implemented by using the software, the services may be stored in a computer-readable medium or transmitted as one or more instructions or code on a computer-readable medium. The computer-readable medium includes a computer storage medium and a communication medium. The communication medium includes any medium that enables a computer program to be transmitted from one place to another place. The storage medium may be any available medium accessible to a general-purpose or dedicated computer.

In the foregoing specific implementations, the purpose, the technical solutions, and the beneficial effects of this application are further described in detail. It should be understood that the foregoing descriptions are merely specific implementations of this application.

In conclusion, the foregoing embodiments are merely intended for describing the technical solutions of this application, rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A packet transmission method, comprising:
obtaining, by a first network device, a first packet;
obtaining, by the first network device, a tunnel header based on the first packet;
encapsulating, by the first network device, an internet protocol version 6 IPv6 header in the first packet to obtain a second packet, wherein the IPv6 header carries the tunnel header; and
sending, by the first network device, the second packet to a second network device.

2. The method according to claim 1, wherein the tunnel header comprises one or more of a virtual extensible local area network VXLAN header, a general packet radio service tunneling protocol GTP header, a generic routing encapsulation GRE header, an IP-in-IP header, an intra-site automatic tunnel addressing protocol ISATAP header, an internet protocol version 4 over internet protocol version 6 IPv4 over IPv6 header, a network virtualization using generic routing encapsulation NVGRE header, a layer 2 tunneling protocol version 3 L2TPv3, and an MPLS in GRE header.

3. The method according to claim 2, wherein the IPv6 header is an IPv6 extension header, and the IPv6 extension header comprises a destination option header DOH.

4. The method according to claim 3, wherein an options Options part of the DOH carries the tunnel header.

5. The method according to claim 3, wherein when the tunnel header is the VXLAN header or the GTP header, the IPv6 extension header further comprises a segment routing header SRH.

6. The method according to claim 5, wherein the tunnel header is carried in a segment identifier list SID list of the SRH.

7. The method according to claim 6, wherein the tunnel header is carried in a SID corresponding to the second network device in the segment list SID list of the SRH.

8. The method according to claim 7, wherein the SID of the second network device indicates the second network device to forward a packet based on the tunnel header carried in the SID.

9. The method according to claim 2, wherein when the tunnel header is the VXLAN header or the GTP header, the IPv6 header is an IPv6 basic header.

10. The method according to claim 9, wherein the tunnel header is carried in a destination address field of the IPv6 basic header.

11. The method according to claim 10, wherein the 65^{th} bit to the 128^{th} bit in the destination address field carry the tunnel header.

12. The method according to claim 10 or 11, wherein a destination address in the destination address field indicates the second network device to forward the packet based on the tunnel header carried in the destination address field.

13. The method according to any one of claims 1 to 12, wherein a flow label field in the IPv6 header carries a port number.

14. The method according to claim 13, wherein the port number is used to perform load balance processing in a forwarding process of the second packet.

15. The method according to any one of claims 1 to 14, wherein the obtaining, by the first network device, a tunnel header based on the first packet comprises:
obtaining, by the first network device, the tunnel header based on an interface for receiving the first packet, wherein the tunnel header corresponds to the interface for receiving the first packet.

16. A packet transmission method, comprising:
receiving, by a second network device, a second packet from a first network device, wherein the second packet is encapsulated with an internet protocol version 6 IPv6 header, and the IPv6 header carries a tunnel header;
obtaining, by the second network device, the tunnel header from the IPv6 header;
decapsulating, by the second network device, the second packet to obtain a first packet, wherein the first packet does not comprise the IPv6 header; and
forwarding, by the second network device, the first packet based on the tunnel header.

17. The method according to claim 16, wherein the tunnel header comprises one or more of a virtual extensible local area network VXLAN header, a general packet radio service tunneling protocol GTP header, a generic routing encapsulation GRE header, an IP-in-IP header, an intra-site automatic tunnel addressing protocol ISATAP header, an internet protocol version 4 over internet protocol version 6 IPv4 over IPv6 header, a network virtualization using generic routing encapsulation NVGRE header, a layer 2 tunneling protocol version 3 L2TPv3, and an MPLS in GRE header.

18. The method according to claim 17, wherein the IP header is an IPv6 extension header, and the IPv6 extension header comprises a destination option header DOH.

19. The method according to claim 18, wherein an options Options part of the DOH carries the tunnel header.

20. The method according to claim 17, wherein when the tunnel header is the VXLAN header or the GTP header, the IPv6 extension header further comprises a segment routing header SRH.

21. The method according to claim 20, wherein the tunnel header is carried in a segment identifier list SID list of the SRH.

22. The method according to claim 21, wherein the tunnel header is carried in a SID corresponding to the second network device in the segment list SID list of the SRH.

23. The method according to claim 22, wherein the obtaining, by the second network device, the tunnel header from the IPv6 header comprises:
determining, by the second network device, that a destination address field of the second packet comprises the SID of the second network device; and
obtaining, by the second network device, the tunnel header from the SID of the second network device in response to determining that the destination address field of the second packet comprises the SID of the second network device.

24. The method according to claim 22 or 23, wherein a type of the SID of the second network device is a virtual network endpoint END.VN type.

25. The method according to claim 24, wherein before the receiving, by a second network device, a second packet from a first network device, the method further comprises:
advertising, by the second network device, the SID of the second network device to the first network device.

26. The method according to any one of claims 22 to 25, wherein the method further comprises:
establishing, by the second network device, a forwarding entry, wherein the forwarding entry comprises the SID of the second network device; and
decapsulating, by the second network device, the second packet based on the forwarding entry to obtain the first packet, and forwarding the first packet based on the tunnel header.

27. The method according to claim 17, wherein when the tunnel header is the VXLAN header or the GTP header, the IPv6 header is an IPv6 basic header.

28. The method according to claim 27, wherein the tunnel header is carried in a destination address field of the IPv6 basic header.

29. The method according to claim 28, wherein the obtaining, by the second network device, the tunnel header from the IPv6 header comprises:
determining, by the second network device, that the destination address field comprises an address of the second network device; and
obtaining, by the second network device, the tunnel header from the destination address field in response to determining that the destination address field comprises the address of the second network device.

30. A network device for packet transmission, applied to a network comprising a plurality of network devices, wherein the plurality of network devices comprise a first network device and a second network device, the network device is the first network device, and the network device comprises:
an obtaining unit, configured to obtain a first packet;
a processing unit, configured to: obtain a tunnel header based on the first packet, and encapsulate an internet protocol version 6 IPv6 header in the first packet to obtain a second packet, wherein the IPv6 header carries the tunnel header; and
a sending unit, configured to send the second packet to the second network device.

31. The device according to claim 30, wherein the tunnel header comprises one or more of a virtual extensible local area network VXLAN header, a general packet radio service tunneling protocol GTP header, a generic routing encapsulation GRE header, an IP-in-IP header, an intra-site automatic tunnel addressing protocol ISATAP header, an internet protocol version 4 over internet protocol version 6 IPv4 over IPv6 header, a network virtualization using generic routing encapsulation NVGRE header, a layer 2 tunneling protocol version 3 L2TPv3, and an MPLS in GRE header.

32. The network device according to claim 31, wherein the IP header is an IPv6 extension header, and the IPv6 extension header comprises a destination option header DOH.

33. The network device according to claim 32, wherein an options Options part of the DOH carries the tunnel header.

34. The network device according to claim 32, wherein when the tunnel header is the VXLAN header or the GTP header, the IPv6 extension header further comprises a segment routing header SRH.

35. The network device according to claim 34, wherein the tunnel header is carried in a segment identifier list SID list of the SRH.

36. The network device according to claim 35, wherein the tunnel header is carried in a SID corresponding to the second network device in the segment list SID list of the SRH.

37. The network device according to claim 36, wherein the SID of the second network device indicates the second network device to forward a packet based on the tunnel header carried in the SID.

38. The network device according to claim 31, wherein when the tunnel header is the VXLAN header or the GTP header, the IPv6 header is an IPv6 basic header.

39. The network device according to claim 38, wherein the tunnel header is carried in a destination address field of the IPv6 basic header.

40. A network device for packet transmission, applied to a network comprising a plurality of network devices, wherein the plurality of network devices comprise a first network device and a second network device, the network device is the second network device, and the network device comprises:
a receiving unit, configured to receive a second packet from the first network device, wherein the second packet is encapsulated with an internet protocol version 6 IPv6 header, and the IPv6 header carries a tunnel header;
a processing unit, configured to: obtain the tunnel header from the IPv6 header, and decapsulate the second packet to obtain a first packet, wherein the first packet does not comprise the IPv6 header; and
a sending unit, configured to forward the first packet based on the tunnel header.

41. The network device according to claim 40, wherein the tunnel header comprises one or more of a virtual extensible local area network VXLAN header, a general packet radio service tunneling protocol GTP header, a generic routing encapsulation GRE header, an IP-in-IP header, an intra-site automatic tunnel addressing protocol ISATAP header, an internet protocol version 4 over internet protocol version 6 IPv4 over IPv6 header, a network virtualization using generic routing encapsulation NVGRE header, a layer 2 tunneling protocol version 3 L2TPv3, and an MPLS in GRE header.

42. The network device according to claim 41, wherein the IP header is an IPv6 extension header, and the IPv6 extension header comprises a destination option header DOH.

43. The network device according to claim 42, wherein an options Options part of the DOH carries the tunnel header.

44. The network device according to claim 42, wherein when the tunnel header is the VXLAN header or the GTP header, the IPv6 extension header further comprises a segment routing header SRH.

45. The network device according to claim 44, wherein the tunnel header is carried in a segment identifier list SID list of the SRH.

46. The network device according to claim 45, wherein the obtaining unit is specifically configured to: determine that a destination address field of the second packet comprises a SID of the second network device; and obtain the tunnel header from the SID of the second network device in response to determining that the destination address field of the second packet comprises the SID of the second network device.

47. The network device according to claim 46, wherein the processing unit is further configured to: establish a forwarding entry, wherein the forwarding entry comprises the SID of the second network device; and decapsulate the second packet based on the forwarding entry to obtain the first packet; and the sending unit is configured to forward the first packet based on the tunnel header.

48. The network device according to claim 41, wherein when the tunnel header is the VXLAN header or the GTP header, the IPv6 header is an IPv6 basic header.

49. The network device according to claim 48, wherein the tunnel header is carried in a destination address field of the IPv6 basic header.

50. The network device according to claim 49, wherein the obtaining unit is specifically configured to: determine that the destination address field comprises an address of the second network device; and obtain the tunnel header from the destination address field in response to determining that the destination address field comprises the address of the second network device.

51. A network system for packet transmission, wherein the network system comprises a first network device and a second network device;
the first network device is configured to perform the method according to any one of claims 1 to 15; and
the second network device is configured to perform the method according to any one of claims 16 to 29.

52. A network device, comprising a processor and a memory, wherein
the memory is configured to store instructions or program code; and
the processor is configured to execute the instructions or the program code in the memory, to enable the network device to perform the method according to any one of claims 1 to 15 or perform the method according to any one of claims 16 to 29.

53. A computer-readable storage medium, wherein the computer-readable storage medium stores instructions, and when the instructions are run on a processor, a computer or a network device is enabled to perform the method according to any one of claims 1 to 15 or perform the method according to any one of claims 16 to 29.

54. A computer program product, wherein the computer program product comprises a program, and when the program is run on a processor, a computer or a network device is enabled to perform the method according to any one of claims 1 to 15 or perform the method according to any one of claims 16 to 29.

55. A chip, comprising an interface circuit and a processor, wherein the interface circuit is connected to the processor, and the processor is configured to enable the chip to perform the method according to any one of claims 1 to 15 or perform the method according to any one of claims 16 to 29.
